# EUROPÄISCHE PATENTSCHRIFT

(11) **EP 3 925 423 B1**
(45) Veröffentlichungstag und Bekanntmachung des Hinweises auf die Patenterteilung: **05.06.2024**
(21) Anmeldenummer: 21170354.1
(22) Anmeldetag: 26.04.2021
(51) Int. Cl.: A01B 63/112, A01B 63/14

(54) **LANDWIRTSCHAFTLICHES ARBEITSSYSTEM**
AGRICULTURAL WORK SYSTEM
SYSTÈME DE TRAVAIL AGRICOLE

(30) Priorität: 16.06.2020 DE 102020115871
(43) Veröffentlichungstag der Anmeldung: 22.12.2021
(73) Patentinhaber: CLAAS Tractor S.A.S., 78141 Vélizy-Villacoublay Cedex (FR)
(72) Erfinder: EHLERT, Christian, 33719 Bielefeld (DE); WIECKHORST, Jan Carsten, 29525 Uelzen Orsteil Hanstedt 2 (DE); BIRKMANN, Christian, 33775 Versmold (DE)
(74) Vertreter: CLAAS Gruppe

(56) Entgegenhaltungen:
- EP-A1- 2 583 842
- EP-A1- 3 000 294
- WO-A1-2013/013917
- DE-A1-102016 118 203
- US-A1- 2016 039 480

## Beschreibung

Die Erfindung betrifft ein landwirtschaftliches Arbeitssystem mit einer landwirtschaftlichen Arbeitsmaschine gemäß dem Oberbegriff von Anspruch 1, sowie ein Verfahren für den Betrieb eines solchen Arbeitssystems gemäß dem Oberbegriff von Anspruch 16.

Aus der EP 3 243 368 A2 ist ein landwirtschaftliches Arbeitssystem zur Abarbeitung eines landwirtschaftlichen Arbeitsauftrags mit einer landwirtschaftlichen Arbeitsmaschine, die zumindest eine Vorderachse und eine Hinterachse mit daran angeordneten Bodeneingriffsmitteln aufweist, bekannt. Die Arbeitsmaschine ist mittels mindestens einer Geräteschnittstelle, die eine Traktionsverstärkungsvorrichtung umfasst, mit mindestens einem Anbaugerät bestückbar. Die Arbeitsmaschine umfasst ein den Betrieb zumindest der Arbeitsmaschine optimierendes Fahrerassistenzsystem, welches über eine Recheneinheit, eine Speichereinheit und zumindest eine als Anzeigeeinheit ausgeführte Eingabeschnittstelle verfügt, wobei die Recheneinheit von maschineninternen Sensorsystemen generierte Informationen, externe Informationen und in der Speichereinheit hinterlegbare Informationen verarbeitet. Weiterhin umfasst die Arbeitsmaschine und/oder das zumindest eine Anbaugerät eine Steuervorrichtung zur Steuerung und Regelung der Arbeitsmaschine und des daran adaptierten Anbaugerätes. Das aus der EP 3 243 368 A1 bekannte Fahrerassistenzsystem ist dabei so strukturiert, dass es einen Arbeitsmaschinenautomaten und einen Anbaugeräteautomaten bildet, wobei der Arbeitsmaschinenautomat und der Anbaugeräteautomat eine Optimierung der Arbeitsweise der Arbeitsmaschine und/oder des zumindest einen Anbaugerätes bewirken. Dazu werden für die Arbeitsweise des Anbaugerätes spezifische Optimierungsstrategien herangezogen, wie Power Hop, Stoppelbearbeitung, Bodenlockerung, Ebenheit, Durchmischung, Saatbettbereitung, Krümelung und Rückverfestigung.

Bei Zugarbeiten auf Böden landwirtschaftlicher Nutzflächen ist das Verhältnis aus horizontaler Zugkraft des Fahrwerks bzw. der Bodeneingriffsmittel (Triebkraft) und der vertikalen Kraft auf das Fahrwerk bzw. der Bodeneingriffsmittel (Radlast) der Arbeitsmaschine in einem bestimmten Verhältnis einzustellen, damit sich ein möglichst hoher Traktionswirkungsgrad einstellt. Die horizontale Fahrwerkskraft bzw. Triebkraft ergibt sich dabei aus dem Zugkraftbedarf des Anbaugeräts bei gegebenen Arbeitsparametern wie Arbeitstiefe, Arbeitsgeschwindigkeit und den jeweilig herrschenden Arbeitsbedingungen. Die vertikale Fahrwerkskraft bzw. Radlast kann innerhalb von durch die Bauart der Arbeitsmaschine bedingten Grenzen, wie dem Leergewicht der Arbeitsmaschine, der zulässigen Achslast sowie dem zulässigen Gesamtgewicht der Arbeitsmaschine, durch eine Ballastierung der Arbeitsmaschine angepasst werden, um das Verhältnis aus vertikaler Fahrwerkskraft und horizontaler Fahrwerkskraft in einer Weise einzustellen, welche zu einem verbesserten Traktionswirkungsgrad führt.

Bei angebauten Anbaugeräten wird ein Teil des Geräteeigengewichts und/oder der an den Bodenbearbeitungswerkzeugen wirkenden Prozesskräfte auf die Arbeitsmaschine übertragen. Bei aufgesattelten Geräten wird ein Großteil des Gerätegewichts und/oder der an den Bodenbearbeitungswerkzeugen wirkenden Kräfte vom Fahrwerk bzw. von Stützrädern des aufgesattelten Anbaugeräts getragen. Bei aufgesattelten Anbaugeräten ist es sinnvoll, das Gewicht des Anbaugerätes anteilig auf die Arbeitsmaschine zu übertragen und somit die Achslastverteilung der Arbeitsmaschine zu beeinflussen. Dies geschieht durch die Verwendung einer Traktionsverstärkungsvorrichtung, mit welcher sich das Gewicht des Anbaugerätes und der Vorderachse der Arbeitsmaschine auf die Hinterachse der Arbeitsmaschine übertragen lässt. Das aus der EP 3 243 368 A1 bekannte Arbeitssystem sieht vor, dass das Fahrerassistenzsystem einen Modul "Einsatzzweck" umfasst, mittels dessen vom Bediener der Arbeitsmaschine dialoggeführt ein Einsatzzweck bestimmt wird, wobei die vom Bediener im Modul "Einsatzzweck" definierten Parameter der Arbeitsmaschine und die nach Abarbeitung einer Optimierungsstrategie generierten Arbeitsparameter der Arbeitsmaschine als separate oder gemeinsamer Ergebnisdatensatz gespeichert werden und der oder die Ergebnisdatensätze wiederholt abrufbar und editierbar sind. Der Bediener muss dabei selbst bewerten mit welcher Einstellung der beste Kompromiss aus Leistung, Effizienz und Arbeitsqualität erreicht wird. Neben dieser Problematik der Selbsteinschätzung durch den Bediener treten oftmals Änderungen der Einsatzbedingungen während eines Bearbeitungsvorganges auf, die vom Bediener nicht erkannt und somit auch nicht berücksichtigt werden.

Der Erfindung liegt das Problem zugrunde, das bekannte Arbeitssystem derart auszugestalten und weiterzubilden, dass eine verbesserte Optimierung des Arbeitssystems insbesondere vor dem Hintergrund auftretender der Einsatzbedingungen während eines Bearbeitungsvorganges ermöglicht wird.

Das obige Problem wird bei einem landwirtschaftlichen Arbeitssystem gemäß dem Oberbegriff von Anspruch 1 durch die Merkmale des kennzeichnenden Teils von Anspruch 1 gelöst.

Gemäß dem Anspruch 1 wird ein landwirtschaftliches Arbeitssystem zur Abarbeitung eines landwirtschaftlichen Arbeitsauftrags mit einer landwirtschaftlichen Arbeitsmaschine, die zumindest eine Vorderachse und eine Hinterachse mit daran angeordneten Bodeneingriffsmitteln als Fahrwerkselemente aufweist, vorgeschlagen, wobei die Arbeitsmaschine mittels mindestens einer Geräteschnittstelle, die eine Traktionsverstärkungsvorrichtung umfasst, mit mindestens einem Anbaugerät bestückbar ist, wobei die Arbeitsmaschine ein den Betrieb zumindest der Arbeitsmaschine optimierendes Fahrerassistenzsystem umfasst, welches über eine Recheneinheit, eine Speichereinheit und zumindest eine Eingabeschnittstelle verfügt, wobei die Recheneinheit von maschineninternen Sensorsystemen generierte Informationen, externe Informationen und in der Speichereinheit hinterlegbare Informationen verarbeitet, und wobei die Arbeitsmaschine und/oder das zumindest eine Anbaugerät eine Steuervorrichtung zur Steuerung und Regelung der Arbeitsmaschine und/oder des Anbaugerätes umfassen. Erfindungsgemäß ist vorgesehen, dass das Fahrerassistenzsystem einen kennlinienbasierend arbeitenden Traktionsverstärkerautomaten umfasst, wobei der Traktionsverstärkerautomat für eine optimierte Einstellung der zumindest einen Traktionsverstärkungsvorrichtung in Abhängigkeit von wenigstens einer in der Speichereinheit hinterlegten auswählbaren Regelstrategie und/oder Optimierungszielgröße eingerichtet ist. Durch den Traktionsverstärkerautomaten wird eine automatische Einstellung sowie Regelung der Lastübertragung von dem Anbaugerät auf die Arbeitsmaschine zur Optimierung des Traktionswirkungsgrades bewirkt. Dies geschieht durch eine Beeinflussung der Triebkraftbeiwerte an den Fahrwerkselementen der Arbeitsmaschine. Der Traktionsverstärkerautomat ermöglicht eine optimierte Einstellung durch eine Regelung der Einstellparameter der Arbeitsmaschine, welche Einfluss auf die vertikale Fahrwerkskraft haben. Somit wird eine gegenüber dem Stand der Technik verbesserte und beschleunigte Einstelloptimierung erreicht, durch welche Änderungen der Einsatzbedingungen während eines Bearbeitungsvorganges berücksichtigt werden.

Die Arbeitsmaschine kann frontseitig und/oder heckseitig zumindest eine Geräteschnittstelle aufweisen, der jeweils eine Traktionsverstärkungsvorrichtung zugeordnet ist. Die jeweilige Geräteschnittstelle kann als Kraftheber, insbesondere als Dreipunkt-Kraftheber, und/oder als Anhängevorrichtung ausgeführt sein. Unter einer Anhängevorrichtung im Sinne der Erfindung ist jede Vorrichtung zur Aufnahme eines Anbaugerätes, Anhängers oder Arbeitsgerätes zu verstehen. Dies kann beispielsweise eine Bolzenkupplung, ein Zughaken, ein Zugpendel oder eine Kugelkopfkupplung sein.

Insbesondere kann die Optimierung der Einstellung der zumindest einen Traktionsverstärkungsvorrichtung durch den Traktionsverstärkerautomaten die Berücksichtigung der Auswirkung auf das an die Geräteschnittstelle angeschlossene Anbaugerät sowie die wechselseitige Kraftübertragung zwischen der Arbeitsmaschine und dem Anbaugerät umfassen. Dabei sind die Art bzw. der Typ des Anbaugerätes von großer Bedeutung. So haben Bodenbearbeitungsgeräte, wie beispielsweise ein Pflug oder ein Grubber, einen anderen Einfluss auf den Traktionswirkungsgrad als beispielsweise Anbaugeräte, wie Düngerstreuer oder Aufbausämaschinen, die nicht unmittelbar mit dem Boden in Eingriff stehen beziehungsweise gegenüber Bodenbearbeitungsgeräten nur geringe Horizontalkräfte hervorrufen.

Bevorzugt kann ein Einstellparameter der zumindest einen Traktionsverstärkungsvorrichtung zumindest ein Traktionsverstärkereinstellparameter aus einer Gruppe umfassend einstellbare Länge der Traktionsverstärkungsvorrichtung und/oder einstellbare Traktionsverstärkerkraft sein. Bevorzugt ist die Traktionsverstärkungsvorrichtung als zumindest ein Hydraulikzylinder ausgeführt. Die anteilige Übertragung des Gewichts des Anbaugerätes auf die Arbeitsmaschine kann durch Aufbringung einer Zugkraft am Oberlenker der als Kraftheber ausgeführten Geräteschnittstelle erfolgen. Hierzu kann der zumindest eine Hydraulikzylinder liegend auf einer Gerätedeichsel des Anbaugerätes angeordnet oder als hydraulischer Oberlenker des Dreipunkt-Krafthebers ausgeführt sein. Bei einer Ausführung der Geräteschnittstelle als Anhängevorrichtung kann zur anteiligen Übertragung des Gewichts des Anbaugerätes auf die Arbeitsmaschine ein Deichselzylinder vorgesehen sein. Die Regelung der als zumindest ein Hydraulikzylinder ausgeführten Traktionsverstärkungsvorrichtung zur Einstellung der Vorspannung erfolgt beispielsweis durch die Ansteuerung eines Hydraulikventils.

Insbesondere kann die auswählbare Regelstrategie zumindest eine Strategie "Effizienz", "Leistung", "Kosten", "Qualität", "Ertrag" oder eine Kombination der Strategien "Effizienz", "Leistung", "Kosten", "Qualität" und/oder "Ertrag" umfassen. Die Regelstrategien stellen Ansätze auf Basis einer ganzheitlichen Betrachtung von Arbeitsmaschine und Anbaugerät und ihrer Arbeitsparameter bei der Optimierung dar. Dabei werden gemäß der Regelstrategie "Effizienz" der Flächenverbrauch (Liter / ha) und/oder die für die Bearbeitung erforderlichen Betriebsstunden optimiert. Der Regelstrategie "Leistung" liegt die Optimierung die Flächenleistung (ha / h) zugrunde. Mit der Regelstrategie "Kosten" sollen die Kosten pro Fläche (Euro / ha) optimiert werden. Die Regelstrategie "Qualität" bewirkt eine Optimierung der Arbeitsparameter von Arbeitsmaschine und Anbaugerät zur Erzielung einer gleichmäßigen und möglichst hohen Arbeitsqualität. Darüber hinaus ist es möglich, einen gewichten Mittelwert aus allen oder Teilen der vorgenannten Strategien über den wenigstens einen Einstellparameter vorzugeben.

Die Optimierungszielgrößen können "Flächenleistung", "Flächenverbrauch", "Ertrag pro Fläche", "Kosten pro Fläche" und/oder "Arbeitsqualität" umfassen. Die auswählbaren Optimierungszielgrößen bieten die Möglichkeit, spezifische Einzelaspekte, insbesondere in unterschiedlicher Kombination miteinander, der Optimierung durch den Traktionsverstärkerautomaten zugrunde zu legen. Die Optimierungszielgröße "Kosten pro Fläche" kann beispielsweise vordergründig anfallende Personalkosten, Kraftstoffkosten, Verschleißkosten, Betriebsstunden und dergleichen mehr berücksichtigen. Die Optimierungszielgröße "Flächenleistung" kann beispielsweise vordergründig auf die Steigerung der bearbeiteten Fläche und/oder der verarbeiteten Masse von Einsatzstoffen gerichtet sein. Die Optimierungszielgröße "Arbeitsqualität" stellt beispielsweise die Einmischung von Ernterückständen in den Boden, die Krümelung, die Rückverfestigung, die Futterqualität, die Bodenlockerung, die Reduzierung von Bodenunebenheiten und dergleichen mehr bei der Optimierung in den Vordergrund.

Durch die Auswahl einer Regelstrategie und/oder einer oder mehrerer Optimierungszielgrößen wird das landwirtschaftliche Arbeitssystem durch Verstellen der Traktionsverstärkereinstellparameter mittels des Traktionsverstärkerautomaten ganzheitlich optimiert. Ganzheitlich optimiert heißt dabei, dass Einflüsse berücksichtigt werden, die beispielsweise aus auftretenden Streuungen von Wirkungsgraden und oder Betriebsverhalten des Antriebsstranges einschließlich des Fahrwerks der Arbeitsmaschine resultieren. Vorteilhafterweise werden hierdurch auch die in der Praxis auftretenden Streuungen von Wirkungsgraden bei verschiedenen Einsatzbedingungen berücksichtigt.

Vorzugsweise kann die Steuervorrichtung der Arbeitsmaschine zusammen mit dem Fahrerassistenzsystem den Traktionsverstärkerautomaten bildet, indem die Recheneinheit dazu eingerichtet ist, zur Umsetzung der jeweils ausgewählten Regelstrategie und/oder Optimierungszielgröße Parameter autonom zu ermitteln und der Steuervorrichtung der Arbeitsmaschine vorzugeben, die den wenigstens einen einzustellenden Traktionsverstärkereinstellparameter der Traktionsverstärkervorrichtung beeinflussen. Der Traktionsverstärkerautomat umfasst weiter die mindestens eine Geräteschnittstelle, die der mindestens einen Geräteschnittstelle zugehörigen Aktoren sowie die jeweilige der Geräteschnittstelle zugeordnete Traktionsverstärkervorrichtung. Dabei kann die jeweilige Traktionsverstärkungsvorrichtung, wie bereits weiter oben ausgeführt, Teil der Geräteschnittstelle oder des Anbaugerätes sein.

Insbesondere können zur optimierten Ansteuerung der zumindest einen Traktionsverstärkervorrichtung Arbeitsparameter zu berücksichtigen sein, wobei die den Arbeitsparameter Betriebsparameter der Arbeitsmaschine, eines Antriebsstranges der Arbeitsmaschine, des Anbaugerätes und/oder aus Umgebungsbedingungen resultierende Umweltparameter sind. Bevorzugt finden zumindest die Betriebsparameter des Antriebsstranges und des Anbaugerätes Eingang in die optimierte Ansteuerung, da diese zumeist unmittelbar an der Arbeitsmaschine und dessen Antriebsstrang bzw. an dem Anbaugerät bestimmt werden können. Weiterhin können Umweltparameter von dem Traktionsverstärkerautomaten erfasst, bestimmt oder empfangen werden, welche Rückschlüsse auf aktuell vorherrschende Bodenkonditionen des zu bearbeitenden Bodens zulassen, auf dem das Arbeitssystem bewegt wird.

Vorteilhafterweise können zumindest an der Arbeitsmaschine Sensoreinrichtungen angeordnet sein, die zur Bestimmung von Betriebsparametern und/oder Umweltparametern eingerichtet sind. Zudem kann an dem Anbaugerät zumindest eine Sensoreinrichtung angeordnet sein, welche zumindest der Bestimmung von spezifischen Betriebsparametern des Anbaugerätes dienen. Hierzu kann das Anbaugerät über drahtlose oder drahtgebundene Kommunikationsmittel mit der Arbeitsmaschine verbunden sein, um Daten der zumindest einen Sensoreinrichtung des Anbaugerätes an das Fahrerassistenzsystem zur Auswertung und Berücksichtigung bei der Optimierung durch den Traktionsverstärkerautomaten zu übertragen. Dabei kann es sich bei einer der Sensoreinrichtungen beispielsweise um einen Drehzahlsensor, einen Drehmomentsensor, einen Drucksensor oder einen Kraftsensor handeln. Die Sensoreinrichtungen zur Bestimmung von Betriebsparametern der Arbeitsmaschinesind dem Antriebsstrang bzw. dessen Komponenten, wie Nebenabtrieb oder Nebenaggregaten, unmittelbar zugeordnet. Die mindestens eine Geräteschnittstelle und/oder die jeweilige der mindestens einen Geräteschnittstelle zugeordnete Traktionsverstärkervorrichtung verfügt über Sensoreinrichtungen, mit welchen Kräfte und Bewegungen von Oberlenker und Unterlenkern des Krafthebers und/oder der als Hydraulikzylinder ausgeführten Traktionsverstärkervorrichtung bestimmt werden können. Zudem kann der Geräteschnittstelle und/oder dem Anbaugerät ein Positionssensor zur Bestimmung der Arbeitshöhe zugeordnet sein. Weiterhin können der Arbeitsmaschine und/oder dem Anbaugerät zusätzliche Sensoreinrichtungen zugeordnet sein, die zur Bestimmung von Betriebsinformationen oder Betriebsparametern der Arbeitsmaschine und/oder des Anbaugerätes sowie zur Bestimmung und/oder zum Empfang von Umweltparametern eingerichtet sind. Dabei kann es sich bei einer der Sensoreinrichtungen beispielsweise um einen Geschwindigkeitssensor, einen Neigungssensor, einen optischen Sensor und/oder einen Positionsortungssensor handeln. Mittels des Neigungssensors lässt sich beispielsweise eine Neigung der Arbeitsmaschine und/oder des Anbaugerätes in Längs- und/oder Querrichtung detektieren. Dadurch kann auf die in der jeweiligen Betriebssituation vorherrschende Topologie geschlossen werden. Diese Betriebsinformation kann durch von einem Positionsortungssensor bereitgestellte Daten ergänzt und/oder verifiziert werden.

Insbesondere kann das Fahrerassistenzsystem zum Empfang von externen Informationen eingerichtet sein, um Betriebsparameter und/oder Umweltparameter zu bestimmen. Externe Informationen können beispielsweise von anderen Arbeitsmaschinen, einem externen Farm-Management-System oder allgemein aus dem Internet bezogen werden

Weiterhin kann in der Speichereinheit ein funktionales Modell der Arbeitsmaschine und des Anbaugerätes hinterlegt sein, welches zumindest einen Teil der funktionalen Zusammenhänge der Arbeitsmaschine und des Anbaugerätes abbildet. So können mittels des funktionalen Modells die verschiedenen Betriebssituationen der Arbeitsmaschine und des an die mindestens eine Geräteschnittstelle adaptierten Anbaugerätes modelliert werden, um in der jeweiligen Betriebssituation und unter Berücksichtigung der ausgewählten Regelstrategie und/oder Optimierungszielgröße(n) eine optimierte Ansteuerung der jeweiligen Traktionsverstärkervorrichtung durch den Traktionsverstärkerautomaten zu erreichen. Denkbar sind alternativ auch reine Black-Box-Modelle, die beispielsweise auf Künstlicher Intelligenz (KI) oder neuronalen Netzwerken basieren, oder Mischformen, um zumindest einen Teil der funktionalen Zusammenhänge des Arbeitssystems abzubilden.

Dabei kann zur Abbildung der funktionalen Zusammenhänge von Arbeitsmaschine und Anbaugerät dem zumindest einen Traktionsverstärkereinstellparameter mindestens ein n-dimensionales Kennfeld zugeordnet sein, wobei der jeweilige Traktionsverstärkereinstellparameter als Ausgangsgröße des mindestens einen n-dimensionalen Kennfeldes definiert ist. Mittels des mindestens einen n-dimensionalen Kennfeldes lassen sich auch komplexe funktionale Zusammenhänge des Gesamtsystems aus Arbeitsmaschine, Anbaugerät und Umgebung mit geringem rechnerischen Aufwand abbilden. Kennlinien des n-dimensionalen Kennfeldes können adaptiv an die jeweilige Situation angepasst werden, um Zusammenhänge beim Betrieb von Arbeitsmaschine, Anbaugerät und Umgebungsbedingungen gesamtheitlich zu berücksichtigten, welche Einfluss auf die Regelstrategien bzw. auf die Optimierungszielgröße(n) und damit auf die jeweils erforderliche Einstellung des zumindest einen Traktionsverstärkereinstellparameters haben. Die Anpassung der Kennlinien des n-dimensionalen Kennfeldes erfolgt dabei durch den Traktionsverstärkerautomaten.

Hierbei können zumindest ein oder mehrere Betriebsparameter der Arbeitsmaschine, des Anbaugerätes und/oder aus den Umgebungsbedingungen resultierende Umweltparameter die Eingangsgrößen des mindestens einen n-dimensionalen Kennfeldes bilden. So können als Eingangsgrößen die Betriebsparameter Ausgangsleistung des zumindest einen Antriebsmotors, Motordrehzahl, Getriebeübersetzung, Ausgangsleistung des Getriebes, Getriebeauslastung, Antriebsleistung des zumindest einen Nebenaggregates und/oder des zumindest einen Nebenabtriebs, Schlupf, Leistungsfluss im Nebenabtriebsstrang und/oder Leistungsfluss im Hydraulikantriebsstrang und/oder einem elektrischen Antriebsstrang vorgesehen sein. Weitere Eingangsgrößen können die theoretische und die reale Fahrgeschwindigkeit oder die Stati von Differentialsperre sowie Allradantrieb sein. Externe Informationen als Eingangsgrößen können das Wetter, Bodenart, Bodentyp, Bodenzustand oder Bodenfeuchte sein. Diese Informationen können aus externen Quellen bezogen werden oder manuell durch eine Bedienperson über eine Eingabeschnittstelle des Fahrerassistenzsystems vorgegeben werden. Des Weiteren können Parameter, welche die Bodeneingriffsmittel betreffen, die Ausführung als Raupenlaufwerk oder Reifen an Vorder- und/oder Hinterachse der Arbeitsmaschine, Reifengröße und Reifentyp, das Leergewicht der Arbeitsmaschine, die Ballastierung der Arbeitsmaschine, die Arbeitsmaschinengeometrie Eingangsgrößen des mindestens n-dimensionalen Kennfeldes bilden. Berechnete oder gemessene Betriebsparameter, wie Traktionskräfte, Radkräfte und Radmomente sowie Achslasten an Vorderachse und Hinterachse der Arbeitsmaschine können gleichfalls Eingangsgrößen des mindestens n-dimensionalen Kennfeldes bilden. Weiterhin können Betriebsparameter des Anbaugerätes, wie Anbaugerätetyp, Anbaugerätegewicht, Anbaugerätegeometrie, die Art der Geräteschnittstelle, die Art der Anordnung des Anbaugerätes an der Geräteschnittstelle, d.h. angebaut oder aufgesattelt, die Arbeitsbreite des Anbaugerätes, am Anbaugerät eingestellte anbaugerätespezifische Betriebsparameter, beispielsweise Vorderfurchenbreite, Zugpunkt, Auflagedruck und dergleichen mehr, Eingangsgrößen des mindestens n-dimensionalen Kennfeldes sein. Die vorstehend aufgeführten Betriebsparameter der Arbeitsmaschine und des Anbaugerätes sowie Umweltparameter können entweder direkt gemessen werden (absolut oder relativ), aus anderen Werten berechnet (absolut oder relativ) werden, in Kennfeldern hinterlegt sein oder werden über externe Quellen bezogen, z.B. mittels georeferenzierter Karten oder durch Abruf von cloudbasierten, d.h. auf externen Datenverarbeitungssystemen zur Verfügung gestellten, online-Informationen.

Gemäß einer bevorzugten Weiterbildung kann die Recheneinheit das mindestens eine n-dimensionale Kennfeld im laufenden Betrieb, insbesondere zyklisch, mit den Einsatzbedingungen der Arbeitsmaschine und des Anbaugerätes abgleichen, vorzugsweise, dass in der Speichereinheit mindestens ein n-dimensionales Initialkennfeld für den zumindest einen Traktionsverstärkereinstellparameter hinterlegt ist, und dass bei der ersten Ermittlung des zumindest einen Traktionsverstärkereinstellparameters die Recheneinheit die Ermittlung basierend auf dem Initialkennfeld vornimmt.

Dabei kann die Recheneinheit dazu eingerichtet sein, eine Anpassung der Ausprägung des Initialkennfeldes an bestehende Einsatzbedingungen durch die Verwendung bestimmter Betriebsparameter zumindest der Arbeitsmaschine, insbesondere auch des daran adaptierten Anbaugerätes, oder das Anfahren von Stützstellen im Initialkennfeld durchzuführen. Zusätzlich können gemessene, empfangene oder auf sonstige Weise bestimmte Umweltparameter verwendet werden, um eine Anpassung der Ausprägung des Initialkennfeldes an bestehende Einsatzbedingungen vorzunehmen. Wenn im n-dimensionalen Raum des Initialkennfeldes gemessene Parameter fehlen oder nur in unzureichender Menge vorliegen, wobei diese im standardmäßigen Betrieb der Arbeitsmaschine und des daran angeordneten Anbaugerätes nicht angefahren werden, können stattdessen Stützstellen angefahren werden. Ausgehend von dem Initialkennfeld kann durch das Einstellen von vordefinierten Betriebspunkten, welche Stützstellen in dem mindestens einen n-dimensionale Kennfeld darstellen, die Ausprägung des mindestens einen n-dimensionalen Kennfeldes an die aktuellen Einsatzbedingungen angepasst werden.

Im laufenden Betrieb der Arbeitsmaschine kann die genaue Ausprägung des mindestens einen n-dimensionalen Kennfelds durch Ermitteln zumindest eines der im n-dimensionalen Kennfeld aufgetragenen Parameter an die aktuellen Einsatzbedingungen angepasst werden. Im Arbeitsbetrieb der Arbeitsmaschine mit daran adaptierten Anbaugerät, d.h. bei Durchführung einer Feldbearbeitung, können die Einsatzbedingungen starken Schwankungen unterliegen, die durch den Traktionsverstärkerautomaten zeitnah erfasst und berücksichtigt werden können, um den Betrieb gemäß der ausgewählten Regelstrategie und/oder der ausgewählten Optimierungszielgröße(n) zu optimieren. Zeitnah heißt, dass der Traktionsverstärkerautomat innerhalb eines von den Betriebsgrößen und Reaktionszeiten der Traktionsverstärkervorrichtung abhängigen Zeitintervalls auf Änderungen reagieren kann, um eine Veränderung zumindest eines Traktionsverstärkereinstellparameters zu bewirken.

Gemäß einer vorteilhaften Ausführung kann das Fahrerassistenzsystem auf einem Daten-Cloudservice basierend ausgeführt sein. Dabei werden von den Sensoreinrichtungen der Arbeitsmaschine und/oder dem Anbaugerät generierte Informationen sowie externe Informationen an den Cloudservice übertragen und dort mittels Algorithmen aufbereitet. Die aufbereiteten Daten werden als die zu übertragenden Daten, in Abhängigkeit von denen die Regelstrategie ausgewählt wird, dem Traktionsverstärkerautomaten zuleitet. Alternativ oder zusätzlich kann die externe Rechnereinheit Daten, insbesondere externe Informationen von Dienstanbietern, mittels eines Algorithmus aufbereiten und die aufbereiteten Daten als zu übertragende Daten, in Abhängigkeit von denen die Regelstrategie ausgewählt wird, an den Traktionsverstärkerautomaten übertragen.

Weiterhin wird die eingangs gestellte Aufgabe durch ein Verfahren zum Betreiben eines landwirtschaftlichen Arbeitssystems gemäß dem Oberbegriff des nebengeordneten Anspruches 16 mit den kennzeichnenden Merkmalen des Anspruches 16 gelöst.

Gemäß dem nebengeordneten Anspruch 16 wird ein Verfahren zum Betreiben eines Arbeitssystems zur Abarbeitung eines landwirtschaftlichen Arbeitsauftrags mit einer landwirtschaftlichen Arbeitsmaschine, die zumindest eine Vorderachse und eine Hinterachse mit daran angeordneten Bodeneingriffsmitteln aufweist, vorgeschlagen, wobei die Arbeitsmaschine mittels mindestens einer Geräteschnittstelle, die eine Traktionsverstärkungsvorrichtung umfasst, mit mindestens einem Anbaugerät bestückt wird, wobei die Arbeitsmaschine ein Fahrerassistenzsystem, durch welches der Betrieb zumindest der Arbeitsmaschine optimiert wird, umfasst, wobei das Fahrerassistenzsystem über eine Recheneinheit, eine Speichereinheit und zumindest eine Eingabeschnittstelle verfügt, wobei durch die Recheneinheit von maschineninternen Sensorsystemen generierte Informationen, externe Informationen und in der Speichereinheit hinterlegbare Informationen verarbeitet werden, und wobei die Arbeitsmaschine und/oder das zumindest eine Anbaugerät durch eine Steuervorrichtung der Arbeitsmaschine und/oder des Anbaugerätes gesteuert und geregelt werden, wobei das Fahrerassistenzsystem einen kennlinienbasierend arbeitenden Traktionsverstärkerautomaten umfasst, wobei durch den Traktionsverstärkerautomaten eine optimierte Einstellung zumindest einer Traktionsverstärkungsvorrichtung, die der mindestens einen Geräteschnittstelle zugeordnet ist, in Abhängigkeit von wenigstens einer in der Speichereinheit hinterlegte auswählbare Regelstrategie und/oder Optimierungszielgröße durchgeführt wird.

Das Verfahren zum Betreiben des landwirtschaftlichen Arbeitssystems kann alle im Zusammenhang mit dem erfindungsgemäßen Arbeitssystem beschriebenen Merkmale gemäß den Ansprüchen 2 bis 15 einzeln oder in Kombination aufweisen.

Die vorliegende Erfindung wird nachstehend anhand eines in den Zeichnungen dargestellten Ausführungsbeispieles näher erläutert.

Es zeigen:
- Fig. 1: eine schematische Darstellung eines landwirtschaftlichen Arbeitssystems;
- Fig. 2: eine schematische Darstellung einer Arbeitsmaschine gemäß Fig. 1 und eines Fahrerassistenzsystems;
- Fig. 3: eine Detailansicht des Fahrerassistenzsystems;
- Fig. 4: eine schematische Darstellung der Struktur eines Traktionsverstärkerautomaten;
- Fig. 5: exemplarisch ein n-dimensionales Kennfeld zur Ansteuerung einer Traktionsverstärkervorrichtung der Arbeitsmaschine; und
- Fig. 6: exemplarisch ein Initialkennfeld, welches aufgrund einer Änderung eines Betriebsparameters der Arbeitsmaschine adaptiert wird.

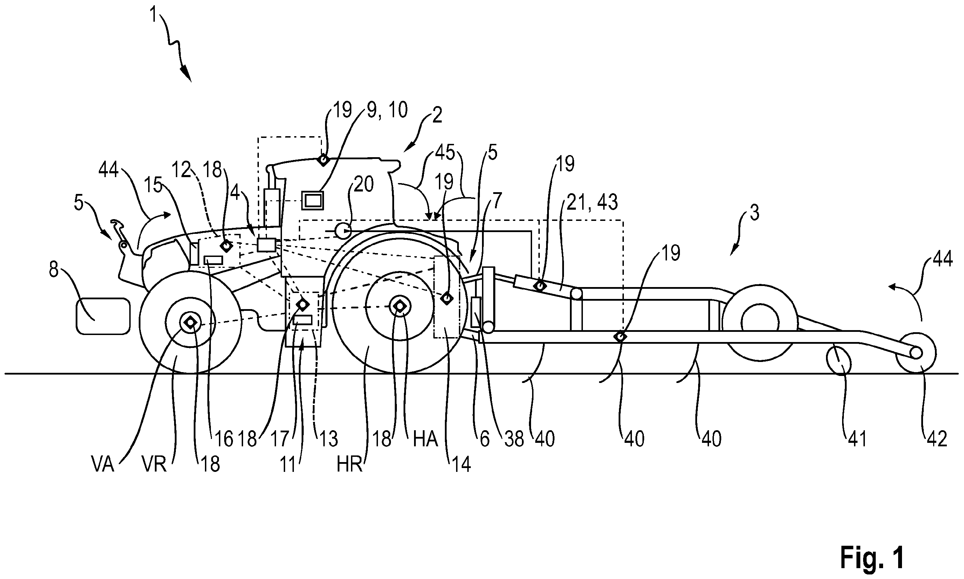

In Fig. 1 ist beispielhaft ein landwirtschaftliches Arbeitssystem 1 zur Abarbeitung eines landwirtschaftlichen Arbeitsauftrags dargestellt. Das Arbeitssystem umfasst eine landwirtschaftlichen Arbeitsmaschine 2, insbesondere einen Traktor. Die Arbeitsmaschine 2 weist zumindest eine Vorderachse VA und eine Hinterachse HA mit daran angeordneten Bodeneingriffsmitteln auf, welche im dargestellten Ausführungsbeispiel als Räder VR, HR ausgeführt sind. Die Arbeitsmaschine 2 ist mittels mindestens einer Geräteschnittstelle 5, die eine Traktionsverstärkungsvorrichtung 21 umfasst, mit mindestens einem Anbaugerät 3 bestückbar. Das Anbaugerät 3 ist gemäß dem dargestellten Ausführungsbeispiel als Grubber ausgeführt und dient der Bodenbearbeitung. Das als Grubber ausgeführte Anbaugerät 3 weist Bodenbearbeitungswerkzeuge 40, zumindest ein Stützrad 41 sowie eine Rückverfestigungswalze 42 auf. Die Arbeitsmaschine 2 weist ein Fahrerassistenzsystem 4 auf, welches unter anderem zur Erfassung, Verarbeitung und Ausgabe von Daten, die einen durchzuführenden landwirtschaftlichen Arbeitsauftrag betreffen, eingerichtet ist. Die zumindest eine Geräteschnittstelle 5 der Arbeitsmaschine 2 ist als ein Hubwerk ausgeführt. Das Hubwerk umfasst Unterlenker 6 sowie einen Oberlenker 7 und zumindest einen Aktor 7a, der in Fig. 1 lediglich beispielhaft angedeutet ist. Das Anbaugerät 3 ist an die im Heckbereich der Arbeitsmaschine 2 angeordnete Geräteschnittstelle 5 adaptiert. Eine weitere - teilweise dargestellte - Geräteschnittstelle 5 kann frontseitig an der Arbeitsmaschine 2 vorgesehen sein, welche im gezeigten Ausführungsbeispiels ein Ballastgewicht 8 zur Ballastierung der Arbeitsmaschine 2 aufnimmt. Die Geräteschnittstelle 5 kann insbesondere als Dreipunkt-Kraftheber ausgeführt sein. Dabei werden die Unterlenker 6 mit waagerechten, quer zur Fahrtrichtung orientierten Wellen bzw. Bolzen an der Arbeitsmaschine 2 befestigt. An den freien Enden der Unterlenker 6 wird das Anbaugerät 3 angekuppelt. Die Gewichtskraft des Anbaugerätes 3 kann auf die Hinterachse HA übertragen werden, was die Traktion und somit die Zugleistung der Arbeitsmaschine 2 erhöht. Die Unterlenker 6 werden entweder direkt oder über ein Hebelsystem mit einem Hydraulikzylinder angehoben, welche allgemein als Aktoren 7a bezeichnet sind. Bei größeren Traktoren 1 kann jeweils ein Hydraulikzylinder pro Unterlenker 6 als Aktor 7a verwendet werden. Zur Verwendung kommen einfach oder doppeltwirkende Hydraulikzylinder. Bei einfach wirkenden Hydraulikzylindern als Aktoren 7a wird nur das Eigengewicht des Anbaugerätes 2 getragen. Doppeltwirkende Hydraulikzylinder als Aktoren 7a haben den Vorteil, dass neben dem Tragen auch Druck auf das Anbaugerät 2 ausgeübt werden kann.

Weiter oberhalb der Unterlenker 6 ist mittig der Oberlenker 7 angebracht, welcher die Verstellung der Neigung des Anbaugerätes 3 ermöglicht. Das nach hinten weisende Ende des Oberlenkers 5 ist der dritte Punkt an einer Dreipunkt-Aufhängung. Der Oberlenker 5 kann als Gewindespindel ausgeführt sein, die ohne Demontage verlängert oder verkürzt werden kann. Bei schwereren Arbeitsmaschinen 2 und Anbaugeräten 3 kann die Länge des Oberlenkers 7 über doppeltwirkende Hydraulikzylinder als Aktoren 7a auch unter Belastung verstellt werden.

Das Fahrerassistenzsystem 4 weist zumindest eine Eingabeschnittstelle 9 auf. Die Eingabeschnittstelle 9 kann als mindestens ein Eingabegerät 10 zur bedienerseitigen Dateneingabe ausgeführt sein und insbesondere mit einer Tastatur, einem Touchscreen und/oder einem Mikrofon gekoppelt sein. Das Eingabegerät 10 kann Teil der Arbeitsmaschine 2, des Anbaugerätes 2 und/oder eines Mobilgeräts sein.

Die Arbeitsmaschine 2 weist einen Antriebsstrang 11 auf. Der Antriebsstrang 11 umfasst zumindest einen Antriebsmotor 12, ein Getriebe 13, zumindest einen Nebenabtrieb 14 und zumindest ein Nebenaggregat 15. Der Antriebsmotor 12 ist als Verbrennungsmotor ausgeführt. Der Antriebsmotor 12 wird durch ein Motorsteuergerät 16 angesteuert. Das Getriebe 13 ist als Lastschaltgetriebe oder als stufenloses Getriebe ausgeführt. Das Getriebe 13 wird durch ein Getriebesteuergerät 17 angesteuert. Der zumindest eine Nebenabtrieb 14 ist als eine Zapfwelle ausgeführt, die dem Antrieb eines Anbaugerätes 3 dienen kann. Die Zapfwelle als Nebenabtrieb 14 kann sowohl im Frontbereich als auch im Heckbereich der Arbeitsmaschine 2 vorgesehen sein. Das zumindest eine Nebenaggregat 15 kann als Motorlüfter ausgebildet sein, welcher Teil einer Kühlvorrichtung des Antriebsmotors 12 ist. Weiterhin kann der Antriebsstrang 11 einen Hydraulikantriebsstrang und/oder einen elektrischen Antriebsstrang aufweisen. Dabei können beispielsweise eine Hydraulikpumpe 20 und ein Hydraulikmotor oder ein Generator sowie ein Elektromotor weitere Nebenaggregate 15 des Antriebsstranges 11 bilden. Der Hydraulikantriebsstrang dient unter anderem zum Betreiben der zumindest einen Geräteschnittstelle 5, mit welchem das Anbaugerät 3 an die Arbeitsmaschine 2 adaptiert wird.

Zumindest die Hinterachse HA der Arbeitsmaschine 2 ist als angetriebene Achse ausgeführt. Der Vorderachse VA und/oder der Hinterachse HA ist zumindest eine Sensoreinrichtung 18 zugeordnet, mit der sich eine an einer der Achsen VA, HA angreifende Fahrwerkskraft bestimmen lässt.

Dem Antriebsstrang 11 sind weitere Sensoreinrichtungen 18 zugeordnet, die zur Bestimmung von Betriebsparametern des Antriebsstranges 11 respektive dessen unterschiedlichen Komponenten eingerichtet sind. Dabei kann es sich bei den weiteren Sensoreinrichtungen 18 beispielsweise um einen Drehzahlsensor, einen Drehmomentsensor, einen Drucksensor oder einen Kraftsensor handeln. Die Sensoreinrichtungen 18 zur Bestimmung von Betriebsparametern des Antriebsstranges 11 sind dem Antriebsstrang 11 unmittelbar zugeordnet. Weiterhin können der Arbeitsmaschine 2 und/oder dem Anbaugerät 3 zusätzliche Sensoreinrichtungen 19 zugeordnet sein, die zur Bestimmung von spezifischen Betriebsparametern der Arbeitsmaschine 2 und/oder des Anbaugerätes 3 eingerichtet sind, die auch unabhängig vom Antriebsstrang 11 bestimmbar sind. Dabei kann es sich bei einer der zusätzlichen Sensoreinrichtungen 19 beispielsweise um einen Geschwindigkeitssensor, einen Neigungssensor, einen optischen Sensor und/oder einen Positionsortungssensor handeln. Des Weiteren kann zumindest eine der zusätzlichen Sensoreinrichtungen 19 zum Empfang und/oder zur Bestimmung von satellitenbasierten oder satellitengestützen Informationen, wie Geodaten oder Bewuchsdaten eingerichtet sein, bei denen es sich um externe Informationen 28 sowie in der Speichereinheit 26 hinterlegte Informationen 29 wie topographische Daten, Routenplanungsdaten und dergleichen mehr handeln kann. Darüber hinaus kann zumindest eine der zusätzlichen Sensoreinrichtungen 19 zur Bestimmung von Daten eingerichtet sein, die einen Rückschluss auf die Bodenbeschaffenheit des Bodens bzw. Untergrunds ermöglichen, auf dem die Arbeitsmaschine 2 mit dem Anbaugerät 3 bewegt wird.

Über das Eingabegerät 10 kann ein Bediener 39 der Arbeitsmaschine 2 weitere Parameter, insbesondere nicht automatisch erfassbare Betriebs-, Arbeits- und/oder Umgebungsparameter, beispielsweise die Art der Arbeitsmaschine 2 und/oder die Anbaugeräteart und/oder den Anbaugerätetyp, eingeben und dadurch dem Fahrerassistenzsystem 4 übermitteln.

Bei Zugarbeiten auf landwirtschaftlichem Boden ist das Verhältnis aus der horizontalen Zugkraft des Fahrwerks bzw. der Bodeneingriffsmittel VR, HR, der Triebkraft, und der vertikalen Kraft auf das Fahrwerk bzw. die Bodeneingriffsmittel VR, HR, der Radlast, in einem bestimmten Verhältnis einzustellen, damit sich der Betriebspunkt in einem Reifen-Boden-Kennfeld bzw. einem Raupen-Boden-Kennfeld im Bereich des maximal möglichen Traktionswirkungsgrads einstellt. Die horizontale Fahrwerkskraft bzw. Triebkraft ergibt sich dabei aus dem Zugkraftbedarf des Anbaugeräts 3 bei gegebener Arbeitstiefe, Arbeitsgeschwindigkeit und den jeweiligen Arbeitsbedingungen. Die vertikale Fahrwerkskraft kann innerhalb arbeitsmaschinenspezifischer Grenzen, die vom Leergewicht, der zulässigen Achslast sowie dem zulässigen Gesamtgewicht der Arbeitsmaschine 2 abhängen, mittels Ballastierung durch die Anordnung des Ballastgewicht 8 an der Arbeitsmaschine 2 angepasst werden, um das Verhältnis aus vertikaler Fahrwerkskraft und horizontaler Fahrwerkskraft, was auch als Triebkraftbeiwert bezeichnet wird, in einem Verhältnis einzustellen, welches zu maximalem Traktionswirkungsgrad führt. Bei angebautem Anbaugerät 3 wird ein Teil des Gerätegewichts und/oder der an Bodenbearbeitungswerkzeugen 41 des Anbaugerätes 3 wirkenden Prozesskräfte auf die Arbeitsmaschine 2 übertragen. Zusätzlich kann bei angebautem Anbaugerät 3 durch Nutzung der Zugkraftregelung Gewicht des Anbaugeräts 3 auf die Arbeitsmaschine 2 übertragen werden. Weiterhin kann der Zugkraftbedarf des Anbaugeräts 3 durch eine Anpassung der Arbeitstiefe beeinflusst werden. Bei aufgesattelten Anbaugeräten 3 wird ein Großteil des Gerätegewichts und/oder der an den Bodenbearbeitungswerkzeugen 41 wirkenden Kräfte vom Fahrwerk bzw. von den Stützrädern 41 des aufgesattelten Anbaugeräts 3 getragen.

Um das Gewicht des Anbaugerätes 3 anteilig auf die Arbeitsmaschine 2 zu übertragen und dadurch die Achslastverteilung der Arbeitsmaschine 2 zu beeinflussen, ist zumindest einen Traktionsverstärkungsvorrichtung 21 an dem Anbaugerät 3 vorgesehen. Die zumindest eine Traktionsverstärkungsvorrichtung 21 ist als Hydraulikzylinder 43 ausgeführt. Der Hydraulikzylinder 43 ist mit der Pumpe 20 als Nebenaggregate 15 durch eine Zuleitung verbunden und wird mit hydraulischem Druck beaufschlagt. Durch die zumindest eine Traktionsverstärkungsvorrichtung 21 lässt sich Gewicht vom Anbaugerät 3 und der Vorderachse VA der Arbeitsmaschine 2 auf die Hinterachse HA der Arbeitsmaschine 2 übertragen, was in Fig. 1 durch Pfeile 44, 45 veranschaulicht ist. Die Pfeile 44 veranschaulichen die Entlastung der Vorderachse VA der Arbeitsmaschine 2 und des zumindest einen Stützrades 41 des Anbaugerätes 3. Die Pfeile 45 veranschaulichen die jeweilige daraus resultierende Belastung der Hinterachse HA der Arbeitsmaschine 2. Des Weiteren ist es auch möglich, Gewicht vom Anbaugerät 3 und der Hinterachse HA der Arbeitsmaschine 2 auf dessen Vorderachse VA zu übertragen. Die jeweilige Kraftverteilung hängt von der Ansteuerung der zumindest einen Traktionsverstärkungsvorrichtung 21 ab.

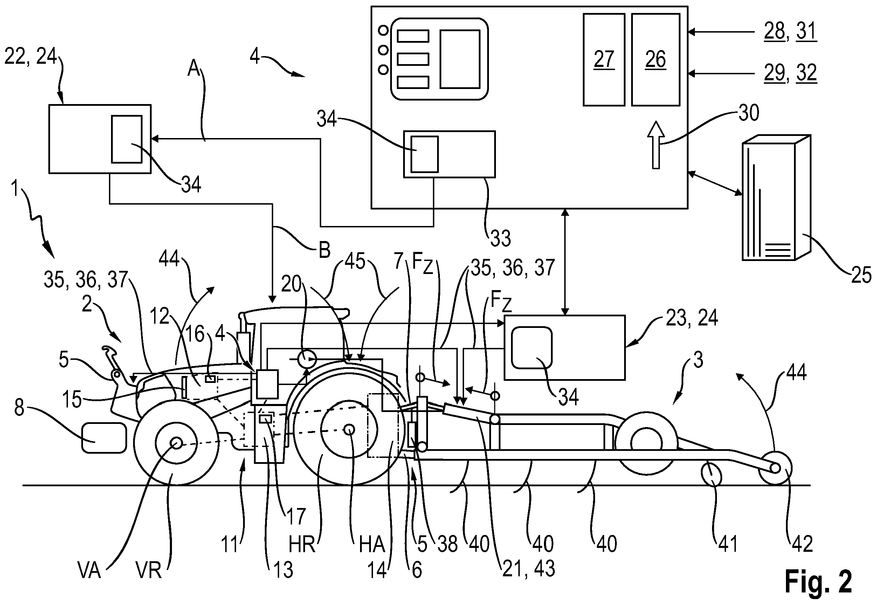

Fig. 2 zeigt eine schematische Darstellung des landwirtschaftlichen Arbeitssystems 1 gemäß Fig. 1 und des Fahrerassistenzsystems 4. Der Arbeitsmaschine 2 und dem Anbaugerät 3 sind eine oder mehrere Steuervorrichtungen 22, 23 zur Steuerung und Regelung der Arbeitsmaschine 2 und/oder des jeweiligen Anbaugerätes 3 zugeordnet. Es liegt im Rahmen der Erfindung, dass der Arbeitsmaschine 2 und dem Anbaugerät 3 entweder separate Steuervorrichtungen 22, 23 zur Ansteuerung oder eine gemeinsame Steuereinheit 24 zugeordnet sind. Die gemeinsame Steuereinheit 24 kann dann entweder auf der Arbeitsmaschine 2 oder dem Anbaugerät 2 positioniert oder mobil ausgeführt sein, sodass die gemeinsame Steuereinheit 24 von dem Bediener 39 der Arbeitsmaschine 2 mitführbar ist. Das Fahrerassistenzsystem 4 kann auch auf einer Daten-Cloud basierend ausgeführt sein, indem Daten statt in einer Speichereinheit 27 zumindest teilweise in einer externen, räumlich entfernten Speichervorrichtung eines externen Servers bzw. einer externen Recheneinheit 25 abrufbar und editierbar hinterlegt sind. Die externe Recheneinheit 25 kann Teil eines Daten-Cloudservices sein, welcher von einem Drittanbieter betreibbar ist.

Das erfindungsgemäße Fahrerassistenzsystem 4 umfasst neben der Eingabeschnittstelle 9 zumindest eine Recheneinheit 26 und eine Speichereinheit 27. Die Recheneinheit 26 verarbeitet von den Sensoreinrichtungen 18, 19 der Arbeitsmaschine 2 und/oder des Anbaugerätes 3 generierte Informationen 28, externe Informationen 29 und in der Speichereinheit 27 hinterlegbare Informationen 30. Die von den Sensoreinrichtungen 18, 19 generierten oder empfangenen Informationen 28 enthalten Umweltparameter 31, zu denen unter anderem Bodenart, Bodentyp, Bodenzustand, Bodenfeuchte, Topographie sowie Wetter zählen. Die Umweltparameter 31 liegen zum Teil auch als externe Informationen bzw. externe Umweltparameter 32 vor, was insbesondere für das Wetter oder für Topographiedaten gelten kann.

Die Sensoreinrichtungen 18, 19 der Arbeitsmaschine 2 und/oder des Anbaugerätes 3 übermitteln die generierten Informationen 28 mittelbar oder unmittelbar an das Fahrerassistenzsystem 4. Die Recheneinheit 26 ist zur Auswertung der generierten Informationen 28 eingerichtet. Die Kommunikation zwischen dem Motorsteuergerät 16, dem Getriebesteuergerät 17, den Sensoreinrichtungen 18, 19 sowie den separaten Steuervorrichtungen 22, 23 bzw. der Steuereinheit 24 und dem Fahrerassistenzsystem 4 kann über verschiedene Kommunikationswege, wie beispielsweise ein Bussystem der Arbeitsmaschine 2 oder des Anbaugerätes 3 oder ein drahtloses Kommunikationssystem, erfolgen.

Das Fahrerassistenzsystem 4 umfasst einen kennlinienbasierend arbeitenden Traktionsverstärkerautomaten 33. Der Traktionsverstärkerautomat 33 ist für eine optimierte Einstellung der zumindest einen Traktionsverstärkungsvorrichtung 21, 43 in Abhängigkeit von wenigstens einer in der Speichereinheit 27 hinterlegten auswählbaren Regelstrategie 46 und/oder Optimierungszielgröße 47 eingerichtet ist. Durch den Traktionsverstärkerautomaten 33 wird eine automatische Einstellung sowie Regelung der Lastübertragung von dem Anbaugerät 3 auf die Arbeitsmaschine 2 zur Optimierung des Traktionswirkungsgrades durch Beeinflussung der Triebkraftbeiwerte an den Fahrwerkselementen der Arbeitsmaschine 2 bewirkt. Die Optimierung durch den Traktionsverstärkerautomaten 33 erfolgt unter Berücksichtigung und Regelung der Vertikalkraft, als wesentlicher Einfluss auf die Traktion. Die Regelung der als zumindest ein Hydraulikzylinder 43 ausgeführten Traktionsverstärkungsvorrichtung 21 zur Einstellung der Vorspannung erfolgt beispielsweis durch die Ansteuerung eines - nicht dargestellten - Hydraulikventils durch den Traktionsverstärkerautomaten 33.

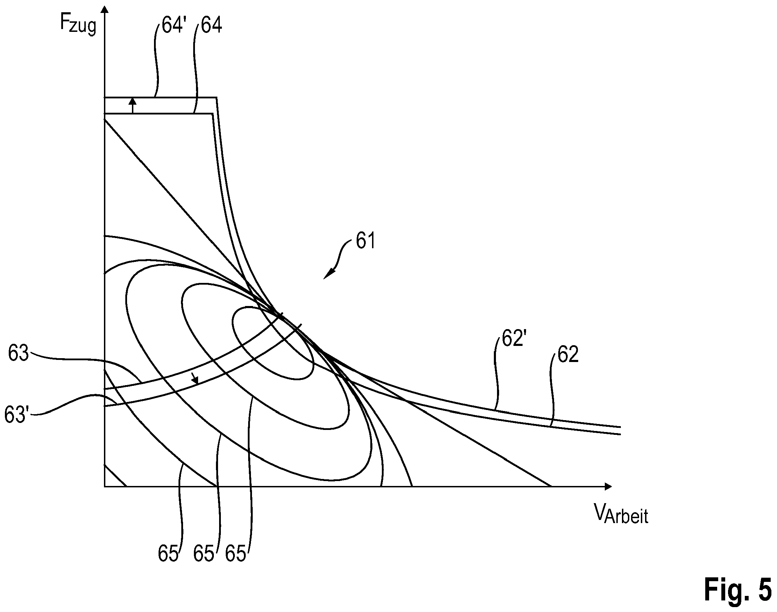

Hierzu ist in der Speichereinheit 27 des Fahrerassistenzsystems 4 zumindest ein n-dimensionales Kennfeld 61 hinterlegt, welches anhand der Darstellung gemäß der Fig. 5 noch näher erläutert wird. Insbesondere ist der Traktionsverstärkerautomaten 33 für eine optimierte Einstellung von wenigstens einem Einstellparameter der zumindest einen Traktionsverstärkungsvorrichtung 21 in Abhängigkeit von den in der Speichereinheit 27 hinterlegten auswählbaren Regelstrategien 46 und/oder Optimierungszielgrößen 47 eingerichtet. Die anteilige Übertragung des Gewichts des Anbaugerätes 3 auf die Arbeitsmaschine 2 kann durch Aufbringung einer Zugkraft Fz am Oberlenker 7 der als Kraftheber ausgeführten Geräteschnittstelle 5 erfolgen. Hierzu kann der zumindest eine Hydraulikzylinder 43 liegend auf einer Gerätedeichsel des Anbaugerätes 3 angeordnet sein. Alternativ kann die Traktionsverstärkungsvorrichtung 21 als hydraulischer Oberlenker 7 der als Dreipunkt-Krafthebers ausgeführten Geräteschnittstelle 5 ausgebildet sein. Bei einer Ausführung der Geräteschnittstelle 5 als Anhängevorrichtung kann zur anteiligen Übertragung des Gewichts des Anbaugerätes 3 auf die Arbeitsmaschine 2 ein Deichselzylinder vorgesehen sein.

Im einfachsten Fall wird die Einstellung durch den Traktionsverstärkerautomaten 33 dadurch bewirkt, dass der Traktionsverstärkerautomaten 33 Steuersignale A generiert, die zumindest der Steuervorrichtung 22 der Arbeitsmaschine 2 bzw. der Steuereinheit 24 zugeführt werden und dort die Ansteuerung der zumindest einen Traktionsverstärkungsvorrichtung 21 durch Generierung entsprechender Steuersignale B bewirken. Arbeitsmaschinen 2 weisen im Allgemeinen ein Fronthubwerk und ein Heckhubwerk als Geräteschnittstelle 5 auf, welche von dem Traktionsverstärkerautomaten 33 gemeinsam oder unabhängig voneinander einstellbar sind.

Die Steuervorrichtung 22 der Arbeitsmaschine 2 oder alternativ die gemeinsame Steuereinheit 24 von Arbeitsmaschine 2 und dem daran adaptierten Anbaugerät 3 bildet zusammen mit dem Fahrerassistenzsystem 4 den Traktionsverstärkerautomaten 33. Dabei kann das Fahrerassistenzsystem 4 ein dem Traktionsverstärkerautomaten 33 zugeordnetes Regelwerk 34 umfassen, welches eine Optimierung der Arbeitsweise der zumindest einen Traktionsverstärkungsvorrichtung 21 bewirkt. Das Regelwerk 34 kann alternativ oder zusätzlich in der Steuervorrichtung 22 der Arbeitsmaschine 2 oder der Steuervorrichtung 23 des Anbaugerätes 2 abrufbar hinterlegt sein. Das Regelwerk 34 umfasst Algorithmen und dergleichen, um die Ansteuerung der Arbeitsmaschine 2 sowie des Anbaugerätes 3, insbesondere der zumindest einen Traktionsverstärkungsvorrichtung 21, durchführen zu können. Es liegt zudem im Rahmen der Erfindung, dass das benötigte Regelwerk 34 auch zentral auf einer nicht näher erläuterten externen Recheneinheit 25 oder einem sonstigen Backendsystem, beispielsweise auf einer Daten-Cloud basierend, hinterlegt sein kann und durch eine, insbesondere bidirektionale, Kommunikationsverbindung zwischen der Arbeitsmaschine 2 und der externen Recheneinheit 25 abrufbar ist.

Die Optimierung der Einstellung der zumindest einen Traktionsverstärkungsvorrichtung 21 durch den Traktionsverstärkerautomaten 33 umfasst die Berücksichtigung der Auswirkung auf das an die Geräteschnittstelle 5 angeschlossene Anbaugerät 3 sowie die wechselseitige Kraftübertragung zwischen der Arbeitsmaschine 2 und dem Anbaugerät 3. Wenigstens ein Einstellparameter der zumindest einen Traktionsverstärkungsvorrichtung 21 ist zumindest ein Traktionsverstärkereinstellparameter 35 aus einer Gruppe umfassend eine einstellbare Länge 36 der Traktionsverstärkungsvorrichtung 21 und/oder eine einstellbare Traktionsverstärkerkraft 37. Die Veränderung des zumindest einen Traktionsverstärkereinstellparameters 35 erfolgt durch die Ansteuerung der zumindest einen Traktionsverstärkungsvorrichtung 21 mittels des Steuersignals B.

Der kennlinienbasierend arbeitende Traktionsverstärkerautomat 33 ist hierbei für eine optimierte Ansteuerung der der zumindest einen Traktionsverstärkungsvorrichtung 21 in Abhängigkeit von in der Speichereinheit 27 hinterlegten auswählbaren Regelstrategien 46 und/oder Optimierungszielgrößen 47 eingerichtet. Durch die Auswahl einer Regelstrategie 46 und/oder einer oder mehrerer Optimierungszielgrößen 47 durch den Bediener 39 wird mittels des Traktionsverstärkerautomaten 33 das landwirtschaftliche Arbeitssystem 1 aus Arbeitsmaschine 2 und Anbaugerät 3 durch Verstellen zumindest eines der Traktionsverstärkereinstellparameter 35 ganzheitlich optimiert. Ganzheitlich optimiert heißt dabei, dass im Unterschied zum Stand der Technik sich die Regelung der zumindest einen Traktionsverstärkungsvorrichtung 21, d.h. der Traktionsverstärkereinstellparameter 35 nicht alleinig auf eine Behelfszielgröße wie den hydraulischen Druck im Hydraulikzylinder 43, den Schlupf an den Rädern HR stützt, sondern darüber hinaus Einflüsse berücksichtigt, die beispielsweise aus auftretenden Streuungen von Wirkungsgraden und oder Betriebsverhalten des Antriebsstranges 11 einschließlich des Fahrwerks der Arbeitsmaschine 2, welches Vorderachse VA und Hinterachse HA sowie die daran angeordneten Bodeneingriffsmittel VR, HR umfasst, resultieren. Vorteilhafterweise werden hierdurch auch die in der Praxis auftretenden Streuungen von Wirkungsgraden bei verschiedenen Einsatzbedingungen berücksichtigt.

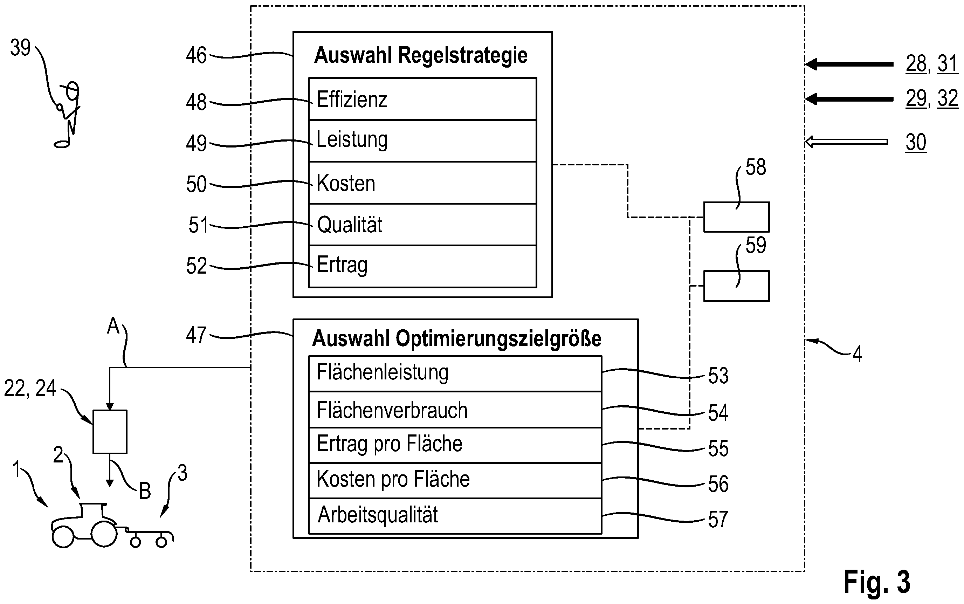

Die Darstellung in Fig. 3 zeigt eine Detailansicht des Fahrerassistenzsystems 4 der Arbeitsmaschine 2 wobei Visualisierungs-, Bedien- und strukturelle Aspekt in ein und derselben Darstellung zusammengefasst sind. Zur Optimierung der Arbeitsweise des Traktionsverstärkerautomaten 33 der Arbeitsmaschine 2 umfasst das Fahrerassistenzsystem 4 auswählbare Regelstrategien 46, wobei die auswählbaren Regelstrategien 46 zugmaschinenspezifische Strategien, anbaugerätespezifische Strategien und/oder eine Kombination aus beiden sein können. Eine effiziente Optimierung der Ansteuerung des Traktionsverstärkerautomaten 33 der Arbeitsmaschine 2 unter Berücksichtigung des adaptierten Anbaugerätes 3 ergibt sich dann, wenn die auswählbaren Regelstrategien 46 zumindest eine der Regelstrategien "Effizienz" 48, "Leistung" 49, "Kosten" 50, "Qualität" 51 sowie "Ertrag" 52 umfassen. Dabei werden gemäß der Regelstrategie "Effizienz" 48 der Flächenverbrauch (Liter / ha) und/oder die für die Bearbeitung erforderlichen Betriebsstunden optimiert. Der Regelstrategie "Leistung" 49 liegt die Optimierung der Flächenleistung (ha / h) zugrunde. Mit der Regelstrategie "Kosten" 50 sollen die Kosten pro Fläche (Euro / ha) optimiert werden. Die Regelstrategie "Qualität" 51 bewirkt eine Optimierung der Arbeitsparameter von Arbeitsmaschine 2 und Anbaugerät 3 zur Erzielung einer gleichmäßigen und möglichst hohen Arbeitsqualität. Darüber hinaus ist es möglich, einen gewichten Mittelwert aus allen oder Teilen der vorgenannten Strategien über den wenigstens einen Arbeitsparameter, insbesondere den Traktionsverstärkereinstellparameter 35, vorzugeben.

Weiterhin umfasst das Fahrerassistenzsystem 4 zur Optimierung der Arbeitsweise des Arbeitssystems 1 durch die optimierte Ansteuerung der zumindest einen Traktionsverstärkungsvorrichtung 21 auswählbare Optimierungszielgrößen 47. Die Optimierungszielgrößen 47 sind alternativ oder zusätzlich zu den Regelstrategien 46 durch den Bediener 39 auswählbar.

Die Optimierungszielgrößen 47 können "Flächenleistung" 53, "Flächenverbrauch" 54, "Ertrag pro Fläche" 55, "Kosten pro Fläche" 56 und/oder "Arbeitsqualität" 57 umfassen. Die auswählbaren Optimierungszielgrößen 47 bieten die Möglichkeit, spezifische Einzelaspekte, insbesondere in unterschiedlicher Kombination miteinander, der Optimierung der Traktionsverstärkereinstellparameter 35 durch den Traktionsverstärkerautomaten 33 zugrunde zu legen. Die Optimierungszielgröße "Kosten pro Fläche" 56 kann beispielsweise vordergründig anfallende Personalkosten, Kraftstoffkosten, Verschleißkosten, Betriebsstunden und dergleichen mehr berücksichtigen. Die Optimierungszielgröße "Flächenleistung" 53 kann beispielsweise vordergründig auf die Steigerung der bearbeiteten Fläche und/oder der verarbeiteten Masse von Einsatzstoffen gerichtet sein. Die Optimierungszielgröße "Arbeitsqualität" 57 stellt beispielsweise die Einmischung von Ernterückständen in den Boden, die Krümelung, die Rückverfestigung, die Futterqualität, die Bodenlockerung, die Reduzierung von Bodenunebenheiten und dergleichen mehr bei der Optimierung in den Vordergrund.

Das Fahrerassistenzsystem 4 kann zudem so beschaffen sein, dass es entweder in einem Dialogmodus 58 mit der Bedienperson 39 oder in einem Automatikmodus 59 betrieben werden kann. In beiden Fällen findet die Kommunikation, der Dialog mit der Bedienperson 39, natürlichsprachig statt.

Die Steuervorrichtung 22 der Arbeitsmaschine 2 bildet zusammen mit dem Fahrerassistenzsystem 4 den Traktionsverstärkerautomaten 33, indem die Recheneinheit 26 des Fahrerassistenzsystem 4 dazu eingerichtet ist, zur Umsetzung der jeweils ausgewählten Regelstrategie 46 und/oder Optimierungszielgröße 47 generierte Informationen 28, externe Informationen 29, in der Speichereinheit 27 hinterlegte Informationen 30, welche Arbeitsparameter der Geräteschnittstelle 5, des Antriebsstranges 11, der Arbeitsmaschine 2 , des Anbaugerätes 3 sowie Umweltparameter 31, 32 aus aktuell vorherrschenden Umgebungsbedingungen autonom zu bestimmen bzw. zu ermitteln und der Steuervorrichtung 22 zur Ansteuerung der der zumindest einen Traktionsverstärkungsvorrichtung 21 vorzugeben. Dies kann durch das Übermitteln der Steuersignale A an die Steuervorrichtung 22 bzw. Steuereinheit 24 erfolgen, welche daraufhin ein entsprechendes Steuersignal B an die zumindest eine Traktionsverstärkungsvorrichtung 21 übermittelt.

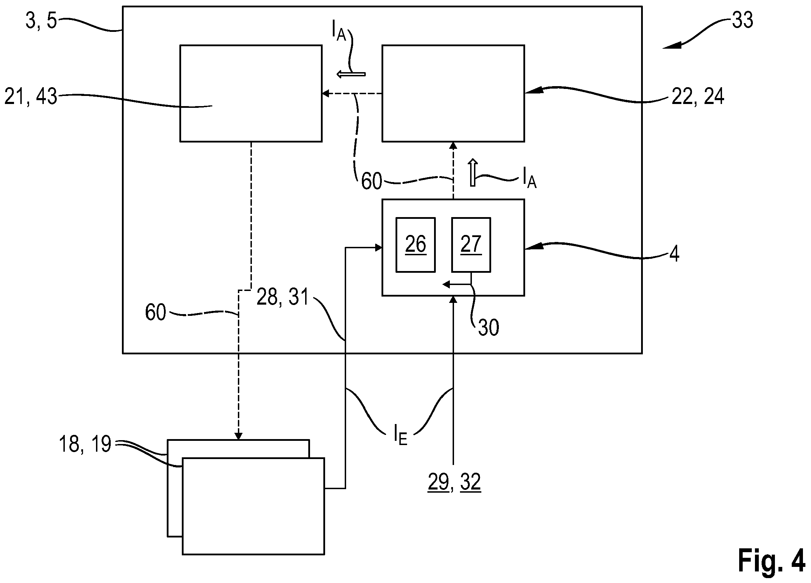

In Fig. 4 ist eine schematische Ansicht der Struktur des Traktionsverstärkerautomaten 33 dargestellt. Der Traktionsverstärkerautomat 33 umfasst das Anbaugerät 3 und/oder die zumindest eine Geräteschnittstelle 5 der Arbeitsmaschine 2, welche die zumindest eine anzusteuernde Traktionsverstärkungsvorrichtung 21 aufweisen, die Steuervorrichtung 22 bzw. Steuereinheit 24 sowie das Fahrerassistenzsystem 4. Von der Steuervorrichtung 22 werden Steuersignale B an die Traktionsverstärkungsvorrichtung 21 mittels eines Datenbusses 60 übermittelt, durch welche die zumindest eine Traktionsverstärkungsvorrichtung 21 des Anbaugerätes 3 und/oder der Geräteschnittstelle 5 eingestellt wird. Die Sensoreinrichtungen 18, 19 überwachen das Arbeitssystem 1, um aus den erfassten Arbeitsparametern der Arbeitsmaschine 2 und des Anbaugerätes 3 die jeweils optimalen Traktionsverstärkereinstellparameter 35, die einzustellende Länge 36 der Traktionsverstärkungsvorrichtung 21 und/oder die einzustellende Traktionsverstärkerkraft 37, bestimmen zu können. Die Sensoreinrichtung 19 stellt ihre erfassten Daten als generierte Informationen 28 mittels des Bussystems 60 zumindest dem Fahrerassistenzsystem 4 zur Auswertung zur Verfügung. Darüber hinaus werden dem Fahrerassistenzsystem 4 von den anderen Sensorvorrichtungen 18 generierte Informationen 28 und Umweltparameter 31, die externen Informationen 29 und Umweltparameter 32 bereitgestellt, die beispielsweise von anderen Arbeitsmaschinen und/oder einer externen Recheneinheit 25 auf einer Hofstelle an die Arbeitsmaschine 2 übermittelt werden und den landwirtschaftlichen Arbeitsvorgang beeinflussen können. Die von den Sensoreinrichtungen 18, 19 bereitgestellten Daten, die generierten Informationen 28, sowie die externen Informationen 29, die in der Speichereinheit 27 hinterlegten Informationen 30 sowie die Umweltparameter 31, 32 bilden Eingangsgrößen I_{E} des Traktionsverstärkerautomaten 33. Mit I_{A} sind Ausgangsgrößen des Traktionsverstärkerautomaten 33 bezeichnet, welche der Generierung der Steuersignale A bzw. B zugrunde gelegt werden. Der Traktionsverstärkerautomat 33 optimiert die Arbeitsweise der zumindest einen Traktionsverstärkervorrichtung 21 autonom, d.h. der Traktionsverstärkerautomat 33 ist dazu eingerichtet, die erforderlichen Einstellungen der Traktionsverstärkereinstellparameter 35 kontinuierlich autonom zu bestimmen und vorzugeben. Durch den Traktionsverstärkerautomaten 33 werden an die jeweils vorliegenden Betriebs- und Erntebedingungen optimal angepasste Arbeitsparameter, insbesondere Traktionsverstärkereinstellparameter 35, dem Arbeitssystem 1 bereitgestellt.

In Fig. 5 ist exemplarisch ein n-dimensionales Kennfeld 61 zur Ansteuerung der zumindest einen Traktionsverstärkervorrichtung 21 dargestellt. In der Speichereinheit 27 ist ein funktionales Modell des Arbeitssystems 1 aus Arbeitsmaschine 2 und Anbaugerät 3 hinterlegt, welches zumindest einen Teil der funktionalen Zusammenhänge der Arbeitsmaschine 2 und des daran adaptierten Anbaugerätes 3 abbildet. Denkbar sind auch reine Black-Box-Modelle, die beispielsweise auf Künstlicher Intelligenz (KI) oder neuronalen Netzwerken basieren, oder Mischformen, um zumindest einen Teil der funktionalen Zusammenhänge der Arbeitsmaschine 2 und des Anbaugerätes 3 abzubilden. Zur Abbildung der funktionalen Zusammenhänge der Arbeitsmaschine 2 und des Anbaugerätes 3 ist den Arbeitsparametern Zugkraftkennlinie 62, 62' der Arbeitsmaschine 2 und Zugkraftkennlinie 63, 63' des Anbaugerätes 3 in Abhängigkeit von zumindest einem Traktionsverstärkereinstellparameter 35, insbesondere allen Traktionsverstärkereinstellparametern 35, das mindestens eine n-dimensionale Kennfeld 61 zugeordnet, wobei der zumindest eine Traktionsverstärkereinstellparameter 35 als Ausgangsgröße I_{A} des mindestens einen n-dimensionalen Kennfeldes 61 definiert ist. Die Zugkraftkennlinien 62 und 63 ergeben sich für eine erste Einstellung von zumindest einem Traktionsverstärkereinstellparameter 35 und die Zugkraftkennlinien 62' und 63' ergeben sich für eine zweite, von der ersten Einstellung des zumindest einen Traktionsverstärkereinstellparameters 35 abweichende Einstellung von dem zumindest einen Traktionsverstärkereinstellparameter 35. Das n-dimensionale Kennfeld 61 umfasst insbesondere mindestens drei Eingangsgrö-βen I_{E}.

In dem Kennfeld 61 sind als Eingangsgrößen I_{E} die Arbeitsgeschwindigkeit v_{Arbeit} über die Zugkraft F_{Zug} aufgetragen. Die Ausgangsgröße I_{A} bildet der zumindest eine Traktionsverstärkereinstellparameter 35. Mit den Bezugszeichen 62, 62' bzw. 63, 63' sind die Zugkraftkennlinien der Arbeitsmaschine 2 sowie des Anbaugerätes 3 bei unterschiedlich eingestellten Traktionsverstärkereinstellparametern 35 bezeichnet, die in dem n-dimensionalen Kennfeld 61 jeweils exemplarisch dargestellt sind. Mit 64 bzw. 64` ist das jeweilige maximale Zugkraftpotential der Arbeitsmaschine 2 für unterschiedlich eingestellte Traktionsverstärkereinstellparameter 35 bezeichnet. Das jeweilige maximale Zugkraftpotential 64, 64' des Antriebsstranges 11 einschließlich der im Bodenkontakt stehenden Räder VR, HR ist über der Arbeitsgeschwindigkeit v_{Arbeit} aufgetragen. Durch Veränderung des oder der Traktionsverstärkereinstellparameter 35 ändert sich das Niveau des maximalen Zugkraftpotentials 64, 64' und ggf. auch das maximale Zugleistungspotential durch Effizienzgewinne in der Leistungsübertragung. Weiterhin sind Linien 65 konstanten spezifischen Kraftstoffverbrauchs in Form von sogenannten "Muschelkennlinien" im Hintergrund dargestellt. Der jeweilige Schnittpunkt der Zugraftkennlinie 63,63` des Anbaugerätes 3 mit der Zugraftkennlinie 62 bzw. 62' der Arbeitsmaschine 2 definiert einen sich bei Volllast bei verschiedenen Einstellungen der Traktionsverstärkereinstellparameter 35 ergebenden Betriebspunkt. Die Linien 65 konstanten spezifischen Kraftstoffverbrauchs können bei bekannter Konfiguration des Antriebsstranges 11 der Arbeitsmaschine 2 für einen spezifischen Betriebszustand berechnet werden. Das Ändern des oder der Traktionsverstärkereinstellparameter 35 hat einen Einfluss auf die Lage und Form der Zugkraftkennlinien 63, 63' des Anbaugerätes 3 und damit auf die von der Arbeitsmaschine 2 bereitzustellende erforderliche Leistung.

So wird beispielhaft durch eine Veränderung der Traktionsverstärkereinstellparameter 35 eine Erhöhung der Zugkraft F_{Zug} der Arbeitsmaschine 2 ausgehend von dem maximalen Zugkraftpotential 64 gemäß der Zugkraftkennlinie 62 auf das maximale Zugkraftpotential 64' gemäß der Zugkraftkennlinie 62' der Arbeitsmaschine 2 bewirkt. Korrespondierend hiermit verlagert sich die mit der ersten Einstellung der Traktionsverstärkereinstellparameter 35 einstellende Zugkraftkennlinie 63 hin zu der mit der zweiten Einstellung der Traktionsverstärkereinstellparameter 35 einstellenden Zugkraftkennlinie 63' des Anbaugerätes 3.

Ein spezifischer Betriebszustand kann durch die mittels der Sensoreinrichtungen 18, 19 bestimmbaren Betriebsparameter der Arbeitsmaschine 2 und des Anbaugerätes 3, insbesondere des Antriebsstranges 11, des zumindest einen Nebenaggregates 15 des Antriebsstranges 11, sowie aus den Umgebungsbedingungen resultierenden Umweltparametern 31, 32, zu denen unter anderem Bodenart, Bodentyp, Bodenzustand, Bodenfeuchte, Topographie sowie Wetter zählen, festgelegt werden. Die Bestimmung der Betriebsparameter kann dabei durch Messen, Berechnen oder auf sonstige Wiese erfolgen. Die Betriebsparameter des Antriebsstranges 11, des zumindest eines Nebenaggregates 15, des Anbaugerätes 3, des Hydraulikantriebsstranges, des elektrischen Antriebsstranges und/oder anhand der aktuell vorherrschenden Umgebungsbedingungen bestimmten Umweltparameter 31, 32 bilden die zur optimierten Ansteuerung der zumindest einen Traktionsverstärkervorrichtung 21, d.h. die durch den Traktionsverstärkerautomaten 33 zur optimalen Einstellung zu berücksichtigenden Parameter.

Durch die grundsätzliche Kenntnis der Charakteristik der Zugkraft F_{Zug} der Arbeitsmaschine 2, des Zugkraftbedarfs des Anbaugerätes 3 und des Energieverbrauchs über der Arbeitsgeschwindigkeit v_{Arbeit} für verschiedene Randbedingungen entsteht das n-dimensionales Kennfeld 61. Beim Ausführen von Arbeiten durch das Arbeitssystem 1 kann die genaue Ausprägung des n-dimensionalen Kennfelds 61 durch Ermitteln eines der in dem Kennfeld 61 aufgetragenen Parameter an die aktuellen Einsatzbedingungen angepasst werden. Die Kenntnis des Kennfelds 61 ermöglicht es dem Traktionsverstärkerautomaten 33 den oder die Traktionsverstärkereinstellparameter 35 automatisch so zu verstellen, dass das Systemverhalten von Arbeitsmaschine 2 und Anbaugerät 3 entsprechend der jeweiligen Zielgröße, die aus der ausgewählten Regelstrategie 46 und/oder Optimierungszielgröße 47 resultiert, optimiert wird. Die Stellgrößen sind dabei die Traktionsverstärkereinstellparameter 35.

Das Ändern des oder der Traktionsverstärkereinstellparameter 35 hat einen Einfluss auf die Lage der Zugkraftkennlinien 62, 62' bzw. 63, 63' in dem Kennfeld 61 und damit auf die übertragene Leistung. Die Linien 65 konstanten spezifischen Energieverbrauchs können bei bekannter Antriebsstrangkonfiguration für einen Betriebszustand berechnet werden. Relevante Betriebszustände können im beschriebenen Ausführungsbeispiel beispielsweise definiert sein durch:
- Traktionsverstärkereinstellungen
- Kräfte in der Anbaugeräteschnittstelle
- Signale von als Zugkraftmessbolzen ausgeführten Sensoreinrichtungen 19 in der Geräteschnittstelle 5
- Unterschiedliche Motordrückung
- Unterschiedliche Reifeninnendrücke und deren Einfluss auf die Arbeitstiefe des Anbaugerätes 3
- Unterschiedliche Ansteuerung eines Nebenaggregates 15
- Ausgangsleistung des Antriebsmotors 12
- Ausgangsleistung des Getriebes 13 bzw. Getriebeauslastung
- Antriebsleistung eines Nebenverbrauchers ermittelt aus der Differenz von Motorausgangsleistung und Ausgangsleistung des Getriebes 13 unter Berücksichtigung eines Getriebewirkungsgradkennfelds
- Leistungsfluss im Nebenabtrieb 14
- Leistungsfluss in einem Hydraulikantriebsstrang
- Leistungsfluss in einem elektrischen Antriebsstrang
- Schlupf
- Neigungswinkel des Traktors
- Arbeitsmaschinengeometrie
- Arbeitsmaschinengewicht
- Anbaugerätegewicht
- Anbaugerätegeometrie
- Position der Geräteschnittstelle 5
- Arbeitstiefe des Anbaugerätes
- Signale von als Zugkraftmessbolzen ausgeführten Sensoreinrichtungen 19 in der Geräteschnittstelle 5
- Motordrehzahl
- Getriebeübersetzung
- Status Allradantrieb
- Status Differentialsperre
- Arbeitsbreite
- Einstellparameter am Anbaugerät (beispielsweise Vorderfurchenbreite, Zugpunkt, Auflagedruck bei einem Mähwerk)
- Einstellung der Geräteschnittstelle (Position, Schwimmstellung)
- Achslast VA und oder HA berechnet oder gemessen
- Theoretische und reale Fahrgeschwindigkeit
- Reifengröße und Reifentyp
- Radkräfte berechnet oder gemessen
- Raddrehmomente berechnet oder gemessen
- Traktionsparameter berechnet oder gemessen
- Druck im als Hydraulikzylinder 43 ausgeführten Traktionsverstärkervorrichtung 21
- Status der Traktionsverstärkervorrichtung 21
- Neigungswinkel in Quer- und Längsrichtung
- Traktorgeometrie
- Anbaugerätetyp
- Bodenart
- Bodentyp
- Bodenzustand
- Bodenfeuchte
- Wetter

Diese nicht abschließend aufgelisteten Betriebsparameter und Arbeitsparameter des Arbeitssystems 1, die in Form der Daten 28, 29, 30 zur Verfügung stehen bzw. gestellt werden, sowie die Umweltparameter 31, 32 beeinflussen die optimierte Einstellung des zumindest einen Traktionsverstärkereinstellparameters 35 der zumindest einen Traktionsverstärkervorrichtung 21.

Die Betriebsparameter des Antriebsstranges 11 umfassen unter anderem die Ausgangsleistung des zumindest einen Antriebsmotors 12, die Ausgangsleistung des Getriebes 13 bzw. die Getriebeauslastung, die Antriebsleistung des zumindest einen Nebenaggregates 15 und/oder des zumindest einen Nebenabtriebs 14, den Schlupf, die Motordrehzahl, die Fahrgeschwindigkeit, die Getriebeübersetzung, der Status von Allradantrieb und/oder Differentialsperre und/oder den Leistungsfluss im Antriebsstrang des Nebenabtriebs 14, im Hydraulikantriebsstrang oder im elektrischen Antriebsstrang. So kann beispielsweise die Antriebsleistung des zumindest einen Nebenaggregates 15 aus der Differenz von Ausgangsleistung des Antriebsmotors 12 und der Ausgangsleistung des Getriebes 13 unter Berücksichtigung des Getriebewirkungsgradkennfeldes ermittelt werden.

Betriebsparameter der Arbeitsmaschine 2 sind unter anderem der Neigungswinkel der Arbeitsmaschine 2 in Quer- und Längsrichtung, das Gewicht der der Arbeitsmaschine 2, die Ballastierung, die Reifengröße und der Reifentyp der Räder VR, HR an den Achsen VA und HA, die Achslasten, die Radkräfte, die Raddrehmomente, die Traktionsparameter, welche entweder sensorisch von einer der Sensoreinrichtungen 18, 19 erfasst werden oder aus von den Sensoreinrichtungen 18, 19 erfassten oder sonstigen empfangenen oder hinterlegten Daten berechnet werden können.

Des Weiteren können die Betriebsparameter des Anbaugerätes 3 die Art und/oder den Typ des Anbaugerätes 3, die Arbeitsbreite, die Hubposition, die Arbeitstiefe sowie weitere Einstellparameter des Anbaugerätes 3, beispielsweise Vorderfurchenbreite, Zugpunkt, Auflagedruck und dergleichen mehr, umfassen.

Die Umweltparameter 31, 32 bilden unter anderem Bodenart, Bodentyp, Bodenzustand, Bodenfeuchte, die Topographie, das Wetter und dergleichen mehr ab.

Die Recheneinheit 26 kann das mindestens eine n-dimensionale Kennfeld 61 im laufenden Betrieb, insbesondere zyklisch, mit den Einsatzbedingungen des Arbeitssystems 1 abgleichen. Hierzu kann vorzugsweise in der Speichereinheit 27 mindestens ein n-dimensionales Initialkennfeld 61i hinterlegt sein. Somit kann die Recheneinheit 26 des Fahrerassistenzsystems 4 bei der ersten Ermittlung der Traktionsverstärkereinstellparameter 35 nach Auswahl einer Regelstrategie 46 oder einer Optimierungszielgröße 47 die Ermittlung basierend auf dem Initialkennfeld 61i vornehmen.

Des Weiteren kann die Recheneinheit 26 dazu eingerichtet sein, autonom eine Anpassung der Ausprägung des Initialkennfeldes 61i an bestehende Einsatzbedingungen durch die Verwendung von Bemessungswerten und/oder den gemessenen Betriebsparametern in Form der generierten Informationen 28, der externen Informationen 29 und der in der Speichereinheit 27 hinterlegten Informationen 30 sowie der Umweltparameter 31, 32 oder alternativ oder zusätzlich durch das Anfahren von Stützstellen im Initialkennfeld 61i durchzuführen. Ausgehend von dem Initialkennfeld 61i kann durch das Einstellen von vordefinierten Betriebspunkten, die Stützstellen in dem Initialkennfeld 61i darstellen, die Ausprägung des Initialkennfeldes 61i an die aktuellen Einsatzbedingungen angepasst werden, so dass durch diese Anpassung das Kennfeld 61 generiert wird. Hierzu werden in einem ersten Schritt Bemessungswerte respektive Betriebsparameter sowie Umweltparameter 31, 32 mittels der jeweiligen Sensoreinrichtungen 18, 19 akquiriert und/oder als externe Information 29 empfangen und durch die Recheneinheit 26 vorverarbeitet. Sind die Bemessungswerte respektive Betriebsparameter, beispielsweise Drehzahlen, Kräfte, Schlupf, Fahrgeschwindigkeit, etc. quasistationär, so werden diese in das n-dimensionale Initialkennfeld 61i eingetragen. Wenn im n-dimensionalen Raum des Initialkennfeldes 61i einzelne durch die Sensoreinrichtungen 18, 19 bestimmte Bemessungswerte fehlen, weil diese bei regulärer Feldfahrt nicht auftreten oder nur unzureichend vorliegen, da diese im standardmäßigen Betrieb der Arbeitsmaschine 2 und/oder des Anbaugerätes 3 nicht angefahren werden, können stattdessen spezifische Stützstellen aktiv angefahren werden. Der zweite Schritt umfasst die Prüfung und Adaption des funktionalen Modells von Arbeitsmaschine 2 und Anbaugerät 3 auf Basis von Änderungen der aktuellen Einsatzbedingungen, die wiederum mittels der Betriebsparameter, d.h. der generierten Informationen 28, der externen Informationen 29 und der in der Speichereinheit 27 hinterlegten Informationen 30, sowie den zur Verfügung stehenden Umweltparameter 31, 32 bestimmt werden.

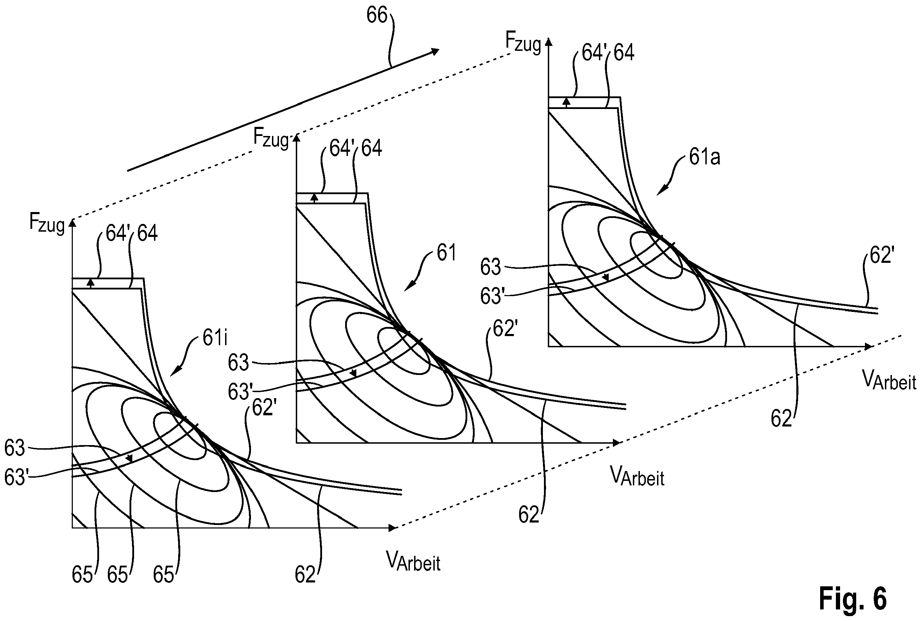

Die Darstellung in Fig. 6 zeigt lediglich exemplarisch ein n-dimensionales Initialkennfeld 61i, welches beispielhaft aufgrund einer Änderung zumindest eines Betriebsparameters im Antriebsstrang 11 adaptiert wird. Bei dem zumindest einen sich ändernden Betriebsparameter handelt es sich beispielhaft um die Drehzahl des als Motorlüfter ausgeführten Nebenaggregates 15, welche im Betrieb in Abhängigkeit von der Belastung des Antriebsmotors 12 ansteigt, wie in Fig. 5 durch den Pfeil 66 veranschaulicht ist. Die Zunahme der Drehzahl des Motorlüfters als Nebenaggregat 15 führt zu einer Adaption des Initialkennfeldes 61i hin zum Kennfeld 61 bzw. von dem Kennfeld 61 weiter zu einem wegen sich ändernder Arbeitsbedingungen, Umgebungsbedingungen, Betriebsparameter oder dergleichen erneut adaptierten Kennfeld 61a.

**Bezugszeichenliste**

| | | | |
|---|---|---|---|
| 1 | Arbeitssystem | 34 | Regelwerk |
| 2 | Arbeitsmaschine | 35 | Traktionsverstärkereinstellparameter |
| 3 | Anbaugerät | 36 | Länge von 21 |
| 4 | Fahrerassistenzsystem | 37 | Traktionsverstärkerkraft |
| 5 | Geräteschnittstelle | 38 | Aktor |
| 6 | Unterlenker | 39 | Bediener |
| 7 | Oberlenker | 40 | Bodenbearbeitungswerkzeug |
| 8 | Ballastgewicht | 41 | Stützrad |
| 9 | Eingabeschnittstelle | 42 | Rückverfestigungswalze |
| 10 | Eingabegerät | 43 | Hydraulikzylinder |
| 11 | Antriebsstrang | 44 | Pfeil |
| 12 | Antriebsmotor | 45 | Pfeil |
| 13 | Getriebe | 46 | Regelstrategie |
| 14 | Nebenabtrieb | 47 | Optimierungszielgröße |
| 15 | Nebenaggregat | 48 | Effizienz |
| 16 | Motorsteuergerät | 49 | Leistung |
| 17 | Getriebesteuergerät | 50 | Kosten |
| 18 | Sensoreinrichtung | 51 | Qualität |
| 19 | Sensoreinrichtung | 52 | Ertrag |
| 20 | Hydraulikpumpe | 53 | Flächenleistung |
| 21 | Traktionsverstärkervorrichtung | 54 | Flächenverbrauch |
| 22 | Steuervorrichtung | 55 | Ertrag pro Fläche |
| 23 | Steuervorrichtung | 56 | Kosten pro Fläche |
| 24 | Steuereinheit | 57' | Arbeitsqualität |
| 25 | Externe Recheneinheit | 58' | Dialogmodus |
| 26 | Recheneinheit | 59 | Automatikmodus |
| 27 | Speichereinheit | 60 | Bussystem |
| 28 | Generierte Information | 61 | Kennfeld |
| 29 | Externe Information | 61i | Initialkennfeld |
| 30 | Hinterlegbare Information | 61a | Adaptiertes Kennfeld |
| 31 | Umweltparameter | 62,62' | Zugkraftkennlinie |
| 32 | Externer Umweltparameter | 63,63' | Zugkraftkennlinie |
| 33 | Traktionsverstärkerautomat | 64,64' | Maximales Zugkraftpotential |
| 65 | Linie konstanten Kraftstoffverbrauchs | | |
| 66 | Pfeil | | |
| F_{Zug} | Zugkraft | | |
| v_{Arbeit} | Arbeitsgeschwindigkeit | | |
| A | Steuersignal | | |
| B | Steuersignal | | |
| I_{E} | Eingangsgröße | | |
| I_{A} | Ausgangsgröße | | |
| VA | Vorderachse | | |
| HA | Hinterachse | | |
| VR | Rad | | |
| HR | Rad | | |

## Patentansprüche

1. Landwirtschaftliches Arbeitssystem (1) zur Abarbeitung eines landwirtschaftlichen Arbeitsauftrags mit einer landwirtschaftlichen Arbeitsmaschine (2), die zumindest eine Vorderachse (VA) und eine Hinterachse (HA) mit daran angeordneten Bodeneingriffsmitteln (VR, HR) aufweist, wobei die Arbeitsmaschine (2) mittels mindestens einer Geräteschnittstelle (5), die eine Traktionsverstärkungsvorrichtung (21) umfasst, mit mindestens einem Anbaugerät (3) bestückbar ist, wobei die Arbeitsmaschine (2) ein den Betrieb zumindest der Arbeitsmaschine (2) optimierendes Fahrerassistenzsystem (4) umfasst, welches über eine Recheneinheit (26), eine Speichereinheit (27) und zumindest eine Eingabeschnittstelle (9) verfügt, wobei die Recheneinheit (26) dazu ausgebildet ist von maschineninternen Sensorsystemen generierte Informationen, externe Informationen und in der Speichereinheit (27) hinterlegbare Informationen zu verarbeiten und wobei die Arbeitsmaschine (2) und/oder das zumindest eine Anbaugerät (3) eine Steuervorrichtung (22, 23, 24) zur Steuerung und Regelung der Arbeitsmaschine (2) und/oder des Anbaugerätes (3) umfassen, **dadurch gekennzeichnet, dass** das Fahrerassistenzsystem (4) einen kennlinienbasierend arbeitenden Traktionsverstärkerautomaten (33) umfasst, wobei der Traktionsverstärkerautomat (33) für eine optimierte Einstellung der zumindest einen Traktionsverstärkungsvorrichtung (21) in Abhängigkeit von wenigstens einer in der Speichereinheit (27) hinterlegten auswählbaren Regelstrategie (46) und/oder Optimierungszielgröße (47) eingerichtet ist.

2. Arbeitssystem (1) nach Anspruch 1, **dadurch gekennzeichnet, dass** die Optimierung der Einstellung der zumindest einen Traktionsverstärkungsvorrichtung (21) durch den Traktionsverstärkerautomaten (33) die Berücksichtigung der Auswirkung auf das an die Geräteschnittstelle (5) angeschlossene Anbaugerät (3) sowie die wechselseitige Kraftübertragung zwischen der Arbeitsmaschine (2) und dem Anbaugerät (3) umfasst.

3. Arbeitssystem (1) nach Anspruch 1 oder 2, **dadurch gekennzeichnet, dass** wenigstens ein Einstellparameter der zumindest einen Traktionsverstärkungsvorrichtung (21) zumindest ein Traktionsverstärkereinstellparameter (35) aus einer Gruppe umfassend einstellbare Länge (36) der Traktionsverstärkungsvorrichtung (21) und/oder einstellbare Traktionsverstärkerkraft (37) ist.

4. Arbeitssystem (1) nach einem der Ansprüche 1 bis 3, **dadurch gekennzeichnet, dass** die auswählbare Regelstrategie (46) zumindest eine Strategie "Effizienz" (47), "Leistung" (48), "Kosten" (49), "Qualität" (50), "Ertrag" (51) oder eine Kombination der Strategien "Effizienz" (47), "Leistung" (48), "Kosten" (49), "Qualität" (50) und/oder "Ertrag" (51) umfasst.

5. Arbeitssystem (1) nach einem der vorangehenden Ansprüche, **dadurch gekennzeichnet, dass** die Optimierungszielgrößen (46) zumindest eine Zielgröße "Flächenleistung" (53), "Flächenverbrauch" (54), "Ertrag pro Fläche" (55), "Kosten pro Fläche" (56) und/oder "Arbeitsqualität" (57) umfassen.

6. Arbeitssystem (1) nach einem der vorangehenden Ansprüche, **dadurch gekennzeichnet, dass** die Steuervorrichtung (22, 24) der Arbeitsmaschine (2) dazu ausgebildet ist zusammen mit dem Fahrerassistenzsystem (4) den Traktionsverstärkerautomaten (33) zu bilden, indem die Recheneinheit (26) dazu eingerichtet ist, zur Umsetzung der jeweils ausgewählten Regelstrategie (46) und/oder Optimierungszielgröße (47) Parameter autonom zu ermitteln und der Steuervorrichtung (22, 24) der Arbeitsmaschine (2) vorzugeben, die den wenigstens einen einzustellenden Traktionsverstärkereinstellparameter (35) der zumindest einen Traktionsverstärkervorrichtung (21) beeinflussen.

7. Arbeitssystem (1) nach Anspruch 6, **dadurch gekennzeichnet, dass** das System dazu eingerichtet ist, dass zur optimierten Ansteuerung der zumindest einen Traktionsverstärkervorrichtung (21) Arbeitsparameter zu berücksichtigen sind, wobei die Arbeitsparameter Betriebsparameter der Arbeitsmaschine (2), eines Antriebsstranges der Arbeitsmaschine (2), des Anbaugerätes (3) und/oder aus Umgebungsbedingungen resultierende Umweltparameter (31, 32) sind.

8. Arbeitssystem (1) nach einem der vorangehenden Ansprüche, **dadurch gekennzeichnet, dass** zumindest an der Arbeitsmaschine (2) Sensoreinrichtungen (18, 19) angeordnet sind, die zur Bestimmung von Betriebsparametern und/oder Umweltparametern (31, 32) eingerichtet sind.

9. Arbeitssystem (1) nach einem der vorangehenden Ansprüche, **dadurch gekennzeichnet, dass** das Fahrerassistenzsystem (4) zum Empfang von externen Informationen (29) eingerichtet ist, um Betriebsparameter und/oder Umweltparameter (31, 32) zu bestimmen.

10. Arbeitssystem (1) nach einem der vorangehenden Ansprüche, **dadurch gekennzeichnet, dass** in der Speichereinheit (27) ein funktionales Modell der Arbeitsmaschine (2) und des Anbaugerätes (3) hinterlegt ist, welches zumindest einen Teil der funktionalen Zusammenhänge der Arbeitsmaschine (2) und des an der mindestens einen Geräteschnittstelle (5) adaptierten Anbaugerätes (2) abbildet.

11. Arbeitssystem (1) nach einem der vorangehenden Ansprüche, **dadurch gekennzeichnet, dass** zur Abbildung der funktionalen Zusammenhänge von Arbeitsmaschine (2) und Anbaugerät (3) dem zumindest einen Traktionsverstärkereinstellparameter (35) mindestens ein n-dimensionales Kennfeld (61) zugeordnet ist, wobei der jeweilige Traktionsverstärkereinstellparameter (35) als Ausgangsgröße (I_{A}) des mindestens einen n-dimensionalen Kennfeldes (61) definiert ist.

12. Arbeitssystem (1) nach Anspruch 11, **dadurch gekennzeichnet, dass** zumindest ein oder mehrere Betriebsparameter der Arbeitsmaschine (2), des Anbaugerätes (3) und/oder aus den Umgebungsbedingungen resultierende Umweltparameter (31, 32) die Eingangsgrößen (I_{E}) des mindestens einen n-dimensionalen Kennfeldes (61) bilden.

13. Arbeitssystem (1) nach einem der Ansprüche 11 oder 12, **dadurch gekennzeichnet, dass** die Recheneinheit (26) das mindestens eine n-dimensionale Kennfeld (61) im laufenden Betrieb, insbesondere zyklisch, mit den Einsatzbedingungen der Arbeitsmaschine (2) und des Anbaugerätes (3) abgleicht, vorzugsweise, dass in der Speichereinheit (27) mindestens ein n-dimensionales Initialkennfeld (61i) für den zumindest einen Traktionsverstärkereinstellparameter (35) hinterlegt ist, und dass bei der ersten Ermittlung des zumindest einen Traktionsverstärkereinstellparameters (35) die Recheneinheit (26) die Ermittlung basierend auf dem Initialkennfeld (61i) vornimmt.

14. Arbeitssystem (1) nach Anspruch 13, **dadurch gekennzeichnet, dass** die Recheneinheit (26) dazu eingerichtet ist, eine Anpassung der Ausprägung des Initialkennfeldes (61i) an bestehende Einsatzbedingungen durch die Verwendung bestimmter Betriebsparameter zumindest der Arbeitsmaschine (2) oder das Anfahren von Stützstellen im Initialkennfeld (61i) durchzuführen.

15. Arbeitssystem (1) nach einem der vorangehenden Ansprüche, **dadurch gekennzeichnet, dass** das Fahrerassistenzsystem (4) auf einem Daten-Cloudservice basierend ausgeführt ist.

16. Verfahren zum Betreiben eines landwirtschaftlichen Arbeitssystems (1) zur Abarbeitung eines landwirtschaftlichen Arbeitsauftrags mit einer landwirtschaftlichen Arbeitsmaschine (2), die zumindest eine Vorderachse (VA) und eine Hinterachse (HA) mit daran angeordneten Bodeneingriffsmitteln (VR, HR) aufweist, wobei die Arbeitsmaschine (2) mittels mindestens einer Geräteschnittstelle (2), die eine Traktionsverstärkungsvorrichtung umfasst, mit mindestens einem Anbaugerät (3) bestückt wird, wobei die Arbeitsmaschine (2) ein Fahrerassistenzsystem (4), durch welches der Betrieb zumindest der Arbeitsmaschine (2) optimiert wird, umfasst, wobei das Fahrerassistenzsystem (4) über eine Recheneinheit (26), eine Speichereinheit (27) und zumindest eine Eingabeschnittstelle (9) verfügt, wobei durch die Recheneinheit (26) von maschineninternen Sensorsystemen generierte Informationen, externe Informationen und in der Speichereinheit (27) hinterlegbare Informationen verarbeitet werden, und wobei die Arbeitsmaschine (2) und/oder das zumindest eine Anbaugerät (3) durch eine Steuervorrichtung (22, 23, 24) der Arbeitsmaschine (2) und/oder des Anbaugerätes (3) gesteuert und geregelt werden, **dadurch gekennzeichnet, dass** das Fahrerassistenzsystem (4) einen kennlinienbasierend arbeitenden Traktionsverstärkerautomaten (33) umfasst, wobei durch den Traktionsverstärkerautomaten (33) eine optimierte Einstellung zumindest einer Traktionsverstärkungsvorrichtung (21), die der mindestens einen Geräteschnittstelle (5) zugeordnet ist, in Abhängigkeit von wenigstens einer in der Speichereinheit (27) hinterlegte auswählbare Regelstrategie (46) und/oder Optimierungszielgröße (47) durchgeführt wird.

## Claims

1. Agricultural working system (1) for processing an agricultural work order with an agricultural working machine (2) which has at least one front axle (VA) and one rear axle (HA) with ground engaging means (VR, HR) arranged thereon, wherein the working machine (2) can be equipped with at least one implement (3) by means of at least one implement interface (5) which comprises a traction amplification device (21), wherein the working machine (2) comprises a driver assistance system (4) which optimises the operation of at least the working machine (2) and which has a computing unit (26), a memory unit (27) and at least one input interface (9), wherein the computing unit (26) is configured to process information generated by internal machine sensor systems, external information and information which can be stored in the memory unit (27), and wherein the working machine (2) and/or the at least one implement (3) comprise a control device (22, 23, 24) for controlling and regulating the working machine (2) and/or the implement (3), **characterised in that in that** the driver assistance system (4) comprises a traction amplifier automaton (33) which operates on the basis of a characteristic curve, the traction amplifier automaton (33) being configured for an optimised setting of the at least one traction amplification device (21) as a function of at least one selectable control strategy (46) and/or optimisation target variable (47) stored in the memory unit (27).

2. Working system (1) according to claim 1, **characterised in that** the optimisation of the setting of the at least one traction amplification device (21) by the traction amplifier automaton (33) comprises consideration of the effect on the implement (3) connected to the implement interface (5) as well as the reciprocal power transmission between the working machine (2) and the implement (3).

3. Working system (1) according to claim 1 or 2, **characterised in that** at least one setting parameter of the at least one traction amplification device (21) is at least one traction amplifier setting parameter (35) from a group comprising adjustable length (36) of the traction amplification device (21) and/or adjustable traction amplification force (37).

4. Working system (1) according to one of claims 1 to 3, **characterised in that** the selectable control strategy (46) comprises at least one strategy "efficiency" (47), "performance" (48), "costs" (49), "quality" (50), "yield" (51) or a combination of the strategies "efficiency" (47), "performance" (48), "costs" (49), "quality" (50) and/or "yield" (51).

5. Working system (1) according to one of the preceding claims, **characterised in that** the optimisation target variables (46) comprise at least one target variable "area output" (53), "area consumption" (54), "yield per area" (55), "costs per area" (56) and/or "work quality" (57).

6. Working system (1) according to one of the preceding claims, **characterised in that** the control device (22, 24) of the working machine (2) is configured to form the traction amplifier automaton (33) together with the driver assistance system (4), **in that** the computing unit (26) is configured to autonomously determine parameters for implementing the respectively selected control strategy (46) and/or optimisation target variable (47) and provide them to the control device (22, 24) of the working machine (2), which parameters influence the at least one traction amplifier setting parameter (35) of the at least one traction amplifier device (21) to be set.

7. Working system (1) according to claim 6, **characterised in that** the system is configured so that working parameters are to be taken into account for optimised actuation of the at least one traction amplification device (21), the working parameters being operating parameters of the working machine (2), of a drive train of the working machine (2), of the mounted implement (3) and/or environmental parameters (31, 32) resulting from ambient conditions.

8. Working system (1) according to one of the preceding claims, **characterised in that** sensor devices (18, 19) are arranged at least on the working machine (2), which are configured to determine operating parameters and/or environmental parameters (31, 32).

9. Working system (1) according to one of the preceding claims, **characterised in that** the driver assistance system (4) is configured to receive external information (29) in order to determine operating parameters and/or environmental parameters (31, 32).

10. Working system (1) according to one of the preceding claims, **characterised in that** a functional model of the working machine (2) and the implement (3) is stored in the memory unit (27), which model depicts at least part of the functional relationships of the working machine (2) and the implement (2) adapted to the at least one implement interface (5).

11. Working system (1) according to one of the preceding claims, **characterised in that** at least one n-dimensional characteristic map (61) is assigned to the at least one traction amplifier setting parameter (35) in order to map the functional relationships between the working machine (2) and the implement (3), the respective traction amplifier setting parameter (35) being defined as an output variable (I_{A} ) of the at least one n-dimensional characteristic map (61).

12. Working system (1) according to claim 11, **characterised in that** at least one or more operating parameters of the working machine (2), of the implement (3) and/or environmental parameters (31, 32) resulting from the ambient conditions form the input variables (I_{E} ) of the at least one n-dimensional characteristic map (61).

13. Working system (1) according to one of claims 11 or 12, **characterised in that** the computing unit (26) compares the at least one n-dimensional characteristic map (61) during operation, in particular cyclically, with the operating conditions of the working machine (2) and the implement (3), preferably, **in that** at least one n-dimensional initial characteristic map (61i) for the at least one traction amplifier setting parameter (35) is stored in the memory unit (27), and **in that** during the first determination of the at least one traction amplifier setting parameter (35), the computing unit (26) carries out the determination based on the initial characteristic map (61i).

14. Working system (1) according to claim 13, **characterised in that** the computing unit (26) is configured to adapt the characteristics of the initial characteristic map (61i) to existing operating conditions by using certain operating parameters of at least the working machine (2) or by approaching of support points in the initial characteristic map (61i).

15. Working system (1) according to one of the preceding claims, **characterised in that** the driver assistance system (4) is based on a data cloud service.

16. Method for operating an agricultural working system (1) for carrying out an agricultural work order with an agricultural working machine (2) which has at least one front axle (VA) and one rear axle (HA) with ground engaging means (VR, HR) arranged thereon, wherein the working machine (2) is equipped with at least one implement (3) by means of at least one implement interface (2) which comprises a traction amplification device, wherein the working machine (2) comprises a driver assistance system (4), by means of which the operation of at least the working machine (2) is optimised, wherein the driver assistance system (4) has a computing unit (26), a memory unit (27) and at least one input interface (9), wherein by means of the computing unit (26) information generated by internal machine sensor systems, external information and information which can be stored in the memory unit (27) are processed and wherein the working machine (2) and/or the at least one implement (3) are controlled and regulated by a control device (22, 23, 24) of the working machine (2) and/or the implement (3), **characterised in that** the driver assistance system (4) comprises a traction amplifier automaton (33) which operates on the basis of a characteristic curve, wherein an optimised setting of at least one traction amplification device (21), which is assigned to the at least one implement interface (5), is carried out by the traction amplifier automaton (33) as a function of at least one selectable control strategy (46) and/or optimisation target variable (47) stored in the memory unit (27).

## Revendications

1. Système de travail agricole (1) destiné à exécuter une instruction de travail agricole avec une machine de travail (2) agricole qui présente au moins un essieu avant (VA) et un essieu arrière (HA) avec des moyens de prise au sol (VR, HR) disposés sur ceux-ci, la machine de travail (2) agricole pouvant être équipée, à l'aide d'au moins une interface d'outil (5) comportant un dispositif de renforcement de traction (21), avec au moins un outil attelé (3), la machine de travail (2) comprenant un système d'assistance au conducteur (4) qui optimise le fonctionnement au moins de la machine de travail (2) et qui dispose d'une unité de calcul (26), d'une unité de mémoire (27) et d'au moins une interface d'entrée (9), l'unité de calcul (26) étant conçue pour traiter des informations générées par des systèmes de capteurs internes à la machine, des informations externes et des informations pouvant être stockées dans l'unité de mémoire (27), et la machine de travail (2) et/ou l'outil attelé (3), au nombre d'au moins un, comprenant un dispositif de commande (22, 23, 24) pour la commande et la régulation de la machine de travail (2) et/ou de l'outil attelé (3), **caractérisé en ce que** le système d'assistance au conducteur (4) comprend un automate de renforcement de traction (33) travaillant sur la base de courbes caractéristiques, l'automate de renforcement de traction (33) étant conçu pour un réglage optimisé du dispositif de renforcement de traction (21), au nombre d'au moins un, en fonction d'au moins une stratégie de réglage (46) et/ou valeur cible d'optimisation (47) sélectionnable, stockée dans l'unité de mémoire (27).

2. Système de travail (1) selon la revendication 1, **caractérisé en ce que** l'optimisation du réglage du dispositif de renforcement de traction (21), au nombre d'au moins un, par l'automate de renforcement de traction (33) comprend la prise en compte de l'effet sur l'outil attelé (3) raccordé à l'interface d'outil (5), ainsi que la transmission de force réciproque entre la machine de travail (2) et l'outil attelé (3).

3. Système de travail (1) selon la revendication 1 ou 2, **caractérisé en ce qu'**au moins un paramètre de réglage du dispositif de renforcement de traction (21) est au moins un paramètre de réglage de renforcement de traction (35) dans un groupe comprenant la longueur réglable (36) du dispositif de renforcement de traction (21) et/ou la force de renforcement de traction réglable (37).

4. Système de travail (1) selon l'une des revendications 1 à 3, **caractérisé en ce que** la stratégie de réglage (46) sélectionnable comprend au moins une stratégie « efficacité » (47), « puissance » (48), « coûts » (49), « qualité » (50), « rendement » (51) ou une combinaison des stratégies « efficacité » (47), « puissance » (48), « coûts » (49), « qualité » (50) et/ou « rendement » (51).

5. Système de travail (1) selon l'une des revendications précédentes, **caractérisé en ce que** les valeurs cibles d'optimisation (46) comprennent au moins une valeur cible « puissance par surface » (53), « consommation par surface » (54), « rendement par surface » (55), « coûts par surface » (56) et/ou « qualité de travail » (57).

6. Système de travail (1) selon l'une des revendications précédentes, **caractérisé en ce que** le système de commande (22, 24) de la machine de travail (2) est conçu pour former avec le système d'assistance au conducteur (4) l'automate de renforcement de traction (33), par le fait que l'unité de calcul (26) est conçue pour déterminer de manière autonome des paramètres, afin de mettre en oeuvre la stratégie de réglage (46) et/ou la valeur cible d'optimisation (47) respective sélectionnée, et pour les prédéfinir pour le système de commande (22, 24) de la machine de travail (2), lesquels paramètres agissent sur le paramètre de réglage de renforcement de traction (35) à régler, au nombre d'au moins un, du dispositif de renforcement de traction (21), au nombre d'au moins un.

7. Système de travail (1) selon la revendication 6, **caractérisé en ce que** le système est conçu pour que des paramètres de travail soient pris en compte à des fins d'activation optimisée du dispositif de renforcement de traction (21), au nombre d'au moins un, les paramètres de travail étant des paramètres de fonctionnement de la machine de travail (2), d'une ligne d'entraînement de la machine de travail (2), de l'outil attelé (3) et/ou des paramètres d'environnement résultant des conditions d'environnement.

8. Système de travail (1) selon l'une des revendications précédentes, **caractérisé en ce qu'**il est prévu, au moins sur la machine de travail (2), des dispositifs de capteurs (18, 19) qui sont conçus pour la détermination de paramètres de fonctionnement et/ou de paramètres d'environnement (31, 32).

9. Système de travail (1) selon l'une des revendications précédentes, **caractérisé en ce que** le système d'assistance au conducteur (4) est conçu pour la réception d'informations externes (29) aux fins de déterminer des paramètres de fonctionnement et/ou des paramètres d'environnement (31, 32).

10. Système de travail (1) selon l'une des revendications précédentes, **caractérisé en ce qu'**un modèle fonctionnel de la machine de travail (2) et de l'outil attelé (3) est stocké dans l'unité de mémoire (27), modèle qui reproduit au moins une partie des relations fonctionnelles de la machine de travail (2) et de l'outil attelé (3) adapté sur l'interface d'outil (5), au nombre d'au moins une.

11. Système de travail (1) selon l'une des revendications précédentes, **caractérisé en ce que** pour la reproduction des relations fonctionnelles de la machine de travail (2) et de l'outil attelé (3), au moins un champ caractéristique (61) à n dimensions est associé au paramètre de réglage de renforcement de traction (35), au nombre d'au moins un, le paramètre de réglage de renforcement de traction (35) respectif étant défini comme grandeur de sortie (I_{A}) du champ caractéristique (61) à n dimensions, au nombre d'au moins un.

12. Système de travail (1) selon la revendication 11, **caractérisé en ce qu'**au moins un ou plusieurs des paramètres de fonctionnement de la machine de travail (2), de l'outil attelé (3) et/ou des paramètres d'environnement (31, 32) résultant des conditions d'environnement constituent les grandeurs d'entrée (I_{E}) du champ caractéristique (61) à n dimensions.

13. Système de travail (1) selon l'une des revendications 11 ou 12, **caractérisé en ce que** l'unité de calcul (26) compare le champ caractéristique (61) à n dimensions, au cours du service, notamment de manière cyclique, avec les conditions d'utilisation de la machine de travail (2) et de l'outil attelé (3), de préférence **en ce qu'**au moins un champ caractéristique initial (61i) à n dimensions pour le paramètre de réglage de renforcement de traction (35), au nombre d'au moins un, est stocké dans l'unité de mémoire (27), et **en ce que** lors de la première détermination du paramètre de réglage de renforcement de traction (35), au nombre d'au moins un, l'unité de calcul (26) effectue la détermination sur la base du champ caractéristique initial (61i).

14. Système de travail (1) selon la revendication 13, **caractérisé en ce que** l'unité de calcul (26) est conçue pour réaliser une adaptation de la formation du champ caractéristique initial (61i) à des conditions d'utilisation existantes, en utilisant des paramètres de fonctionnement définis, au moins de la machine de travail (2), ou en sélectionnant des points nodaux dans le champ caractéristique initial (61i).

15. Système de travail (1) selon l'une des revendications précédentes, **caractérisé en ce que** le système d'assistance au conducteur (4) est réalisé sur la base d'un service de données en nuage.

16. Procédé pour faire fonctionner un système de travail agricole (1), aux fins d'exécuter une instruction de travail agricole avec une machine de travail (2) agricole qui présente au moins un essieu avant (VA) et un essieu arrière (HA) avec des moyens de prise au sol (VR, HR) disposés sur ceux-ci, la machine de travail (2) étant équipée, à l'aide d'au moins une interface d'outil (2) comportant un dispositif de renforcement de traction, avec au moins un outil attelé (3), la machine de travail (2) comprenant un système d'assistance au conducteur (4) qui optimise le fonctionnement au moins de la machine de travail (2), le système d'assistance au conducteur (4) étant doté d'une unité de calcul (26), d'une unité de mémoire (27) et d'au moins une interface d'entrée (9), l'unité de calcul (26) réalisant le traitement d'informations générées par des systèmes de capteurs internes à la machine, d'informations externes et d'informations pouvant être stockées dans l'unité de mémoire (27), et la machine de travail (2) et/ou l'outil attelé (3), au nombre d'au moins un, étant commandés et régulés par un dispositif de commande (22, 23, 24) de la machine de travail (2) et/ou de l'outil attelé (3), **caractérisé en ce que** le système d'assistance au conducteur (4) comprend un automate de renforcement de traction (33) travaillant sur la base de courbes caractéristiques, l'automate de renforcement de traction (33) effectuant un réglage optimisé d'au moins un dispositif de renforcement de traction (21) associé à l'interface d'outil (5), au nombre d'au moins un, en fonction d'au moins une stratégie de réglage (46) et/ou valeur cible d'optimisation (47) sélectionnable, stockée dans l'unité de mémoire (27).
